(19) Europäisches Patentamt / European Patent Office / Office européen des brevets

(11) **EP 3 954 660 A1**

(12) **EUROPEAN PATENT APPLICATION**
published in accordance with Art. 153(4) EPC

(43) Date of publication:
**16.02.2022 Bulletin 2022/07**

(21) Application number: **20787680.6**

(22) Date of filing: **26.02.2020**

(51) International Patent Classification (IPC):
*C01G 53/00* (2006.01)     *H01M 4/36* (2006.01)
*H01M 4/505* (2010.01)     *H01M 4/525* (2010.01)

(52) Cooperative Patent Classification (CPC):
**C01G 53/00; H01M 4/36; H01M 4/505;**
**H01M 4/525; Y02E 60/10**

(86) International application number:
**PCT/JP2020/007710**

(87) International publication number:
**WO 2020/208964 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2019 JP 2019076526**

(71) Applicant: SUMITOMO CHEMICAL COMPANY LIMITED
Chuo-ku
Tokyo 104-8260 (JP)

(72) Inventors:
• KAGEURA, Jun-ichi
  Niihama-shi, Ehime 792-8521 (JP)
• MATSUO, Yoji
  Niihama-shi, Ehime 792-8521 (JP)
• SATO, Yuichi
  Niihama-shi, Ehime 792-8521 (JP)

(74) Representative: **Vossius & Partner Patentanwälte Rechtsanwälte mbB**
**Siebertstraße 3**
**81675 München (DE)**

(54) **LITHIUM METAL COMPOSITE OXIDE POWDER, POSITIVE ELECTRODE ACTIVE MATERIAL FOR LITHIUM SECONDARY BATTERY, AND METHOD FOR PRODUCING LITHIUM METAL COMPOSITE OXIDE POWDER**

(57)    A lithium metal composite oxide powder having a layered structure and containing at least Li, Ni, and an element X, in which, in a cumulative frequency distribution curve of R ranging 0% to 100% as a whole, R(90) that is a value of R at a point where a cumulative frequency from a small side of the R reaches 90% is 1.7 or more and 3.7 or less. R is a value of O/(Ni + X) that is a ratio of an amount of a substance of oxygen, which is indicated by O, to a total amount of substances of nickel and the element X, which is indicated by Ni + X, in one particle of a lithium metal composite oxide that is contained in the lithium metal composite oxide powder. The amounts of the substances of nickel, the element X, and oxygen are obtained by energy-dispersive X-ray (EDX) spectroscopy in which an accelerating voltage is set to 1100 V regarding the one particle of the lithium metal composite oxide.

EP 3 954 660 A1

**Description**

[Technical Field]

The present invention relates to a lithium metal composite oxide powder, a positive electrode active material for a lithium secondary battery, and a method for producing a lithium metal composite oxide powder.
Priority is claimed on Japanese Patent Application No. 2019-076526, filed in Japan on April 12, 2019, the content of which is incorporated herein by reference.

[Background Art]

As a positive electrode active material for lithium secondary batteries, lithium metal composite oxide powders are being used.
Attempts of putting lithium secondary batteries into practical use not only for small-sized power sources in mobile phone applications, notebook personal computer applications, or the like but also for medium-sized or large-sized power sources in automotive applications, power storage applications, or the like have already been underway, and an additional increase in capacity or long-term durability is being required.
Thus far, a variety of studies have been conducted regarding lithium metal composite oxide powders. For example, Patent Document 1 describes a positive electrode active material made of a lithium ion-containing composite oxide in which the valence of nickel is 2.0 to 2.5 and the valence of manganese is 3.5 to 4.0 for the purpose of increasing the capacities of lithium secondary batteries and improving long-term preservability and cycle lives.
In addition, Patent Document 2 describes a positive electrode active material in which a sulfur content in a $LiNiO_2$ powder or $LiNi_{1-x}M_xO_2$ (where $0 < x \leq 0.4$, M is one or more of Co, Mn, B, Al, V, P, Mg, and Ti) is set to 0.5 weight% or less for the purpose of suppressing self-discharge.

[Citation List]

[Patent Documents]

[Patent Document 1]
Japanese Unexamined Patent Application, First Publication No. 2003-203633
[Patent Document 2]
Japanese Unexamined Patent Application, First Publication No. H10-162830

[Summary of Invention]

[Technical Problem]

For the invention described in Patent Document 1 or 2, there is room for additional improvement from the viewpoint of suppressing self-discharge.
The present invention has been made in view of the above-described circumstances, and an object of the present invention is to provide a lithium metal composite oxide powder having a small self-discharge amount, a positive electrode active material for a lithium secondary battery, and a method for producing a lithium metal composite oxide powder.

[Solution to Problem]

That is, the present invention includes the following inventions [1] to [27].

[1] A lithium metal composite oxide powder having a layered structure and containing at least Li, Ni, and an element X, the element X being one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P, in which, in a cumulative frequency distribution curve of R that is defined below, which ranges 0% to 100% as a whole, R(90) that is a value of R at a point where a cumulative frequency from a small side of the R reaches 90% is 1.7 or more and 3.7 or less. R is a value of O/(Ni + X) that is a ratio of an amount of a substance of oxygen, which is indicated by O, to a total amount of substances of nickel and the element X, which is indicated by Ni + X, in one particle of a lithium metal composite oxide that is contained in the lithium metal composite oxide powder.

The amounts of the substances of nickel, the element X, and oxygen are obtained by energy-dispersive X-ray (EDX) spectroscopy in which an accelerating voltage is set to 1100 V regarding the one particle of the lithium metal composite oxide.

[2] The lithium metal composite oxide powder according to [1], in which, in the cumulative frequency distribution curve of R ranging 0% to 100% as a whole, R(10) that is a value of R at a point where the cumulative frequency from the small side of R reaches 10% is 1.1 or more and 3.3 or less.

[3] The lithium metal composite oxide powder according to [1] or [2], in which, in the cumulative frequency distribution curve of R ranging 0% to 100% as a whole, R(50) that is a value of R at a point where the cumulative frequency from the small side of R reaches 50% is 1.5 or more and 2.7 or less.

[4] The lithium metal composite oxide powder according to any one of [1] to [3], in which the following formula (I) is satisfied.

$$Li[Li_m(Ni_{(1-n)}X_n)_{1-m}]O_2 ... \qquad (I)$$

$(-0.1 \leq m \leq 0.2$ and $0 < n \leq 0.7.)$

[5] The lithium metal composite oxide powder according to [4], in which m in the formula (I) is $0 < m \leq 0.2$.

[6] The lithium metal composite oxide powder according to any one of [1] to [5], containing a core particle and a coating material.

[7] The lithium metal composite oxide powder according to [6], in which the coating material contains a lithium-containing composite compound having Li and an element M, provided that the element M is one or more elements selected from Al, B, Si, S, Nb, F, and P.

[8] The lithium metal composite oxide powder according to any one of [1] to [7], further containing a single particle.

[9] The lithium metal composite oxide powder according to any one of [1] to [8], in which, in $D_{10}$ that is a 10% cumulative diameter, $D_{50}$ that is a 50% cumulative diameter, and $D_{90}$ that is a 90% cumulative diameter, all of which are obtained from particle size distribution measurement values, $D_{50}$ that is 50% cumulative diameter is 0.5 $\mu$m or more and 10 $\mu$m or less, and furthermore, the $D_{90}$ and the $D_{10}$ satisfy a relationship of the following formula (A).

$$0.3 \leq (D_{90} - D_{10}) / D_{50} \leq 3 ... (A)$$

[10] A positive electrode active material for a lithium secondary battery, containing the lithium metal composite oxide powder according to any one of [1] to [9].

[11] A method for producing a lithium metal composite oxide powder, including the following steps (a) to (c) in the following order.

The step (a) is a step of mixing a precursor containing at least Ni and a lithium compound containing Li and calcining a mixture to obtain a raw material compound.

The step (b) is a step of bringing a coating raw material containing at least one element M selected from the group consisting of Al, B, Si, S, Nb, F, and P and the raw material compound into contact with each other to obtain a raw material mixture.

The step (c) is a step of thermally treating the raw material mixture at a temperature of 200°C or higher and 600°C or lower.

[12] The method for producing a lithium metal composite oxide powder according to [11], in which the step (b) is a step (b1) of bringing a coating raw material solution 1 containing the element M into contact with the raw material compound each other to obtain the raw material mixture, and, after the step (b1) and before the step (c), a step (b1-A) of removing a solvent that is contained in the raw material mixture and adjusting a content rate of the solvent in the raw material mixture to 30 mass% or less is provided.

[13] The method for producing a lithium metal composite oxide powder according to [12], in which the step (b1) is a step (b1-1) of bringing the coating raw material solution 1 into contact with the raw material compound by spraying to obtain the raw material mixture.

[14] The method for producing a lithium metal composite oxide powder according to [12] or [13], in which, in the step (b1), the raw material compound is adjusted to a temperature of -20°C or higher and 300°C or lower and brought into contact with the coating raw material solution 1.

[15] The method for producing a lithium metal composite oxide powder according to [13] or [14], in which, in the step (b1-1), $D_{32}$ that is a Sauter average particle diameter of sprayed liquid droplets of the coating raw material solution 1 is 10 $\mu$m or more and 500 $\mu$m or less.

[16] The method for producing a lithium metal composite oxide powder according to any one of [13] to [15], in which, in the step (b1-1), a value of $DP_{50}/D_{32}$ that is a ratio of $DP_{50}$ that is a median diameter of the raw material compound to $D_{32}$ that is the Sauter average particle diameter of the sprayed liquid droplets at the time of spraying the coating raw material solution 1 is 0.001 or more and 10 or less.

[17] The method for producing a lithium metal composite oxide powder according to any one of [12] to [16], in which, in the step (b1), a temperature of the coating raw material solution 1 at the time of bringing the coating raw material solution 1 into contact with the raw material compound is -20°C or higher and 300°C or lower.

[18] The method for producing a lithium metal composite oxide powder according to any one of [12] to [17], in which, in the step (b1), a concentration of the element M in the coating raw material solution 1 is 0.001 mol/L or more and 100 mol/L or less.

[19] The method for producing a lithium metal composite oxide powder according to any one of [12] to [18], in which, in the step (b1), a value of M/Li that is a ratio of an amount of a substance of the element M to an amount of a substance of lithium that is contained in the raw material mixture is 0.1 or more and 50 or less, provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

[20] The method for producing a lithium metal composite oxide powder according to [11], in which the step (b) is a step (b2) of immersing the raw material compound in a coating raw material solution 2 containing the element M and lithium to obtain the raw material mixture, and, after the step (b2) and before the step (c), a step (b2-A) of removing a solvent that is contained in the raw material mixture and adjusting a content rate of the solvent in the raw material mixture to 30 mass% or less is provided.

[21] The method for producing a lithium metal composite oxide powder according to [20], in which, in the step (b2), an amount of the coating raw material solution 2 with respect to the raw material compound is 0.1 times or more and 10 times or less based on a weight.

[22] The method for producing a lithium metal composite oxide powder according to [20] or [21], in which a temperature of the coating raw material solution 2 is -20°C or higher and 80°C or lower.

[23] The method for producing a lithium metal composite oxide powder according to any one of [20] to [22], in which, in the step (b2), a concentration of Li that is contained in the coating raw material solution 2 is 0.01 mol/L or more and 10 mol/L or less.

[24] The method for producing a lithium metal composite oxide powder according to any one of [20] to [23], in which, in the step (b2), a value of M/Li that is a ratio of an amount of a substance of the element M to an amount of a substance of lithium that is contained in the raw material mixture is 0.1 or more and 50 or less,

provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

[25] The method for producing a lithium metal composite oxide powder according to [11], in which, in the step (b), a value of M/Li that is a ratio of an amount of a substance of the element M to an amount of a substance of lithium that is contained in the raw material mixture is 0.1 or more and 50 or less,

provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

[26] The method for producing a lithium metal composite oxide powder according to any one of [11] to [25], in which the raw material compound contains the element X, and, in the step (b), a value of M/(Ni + X) that is a ratio of the element M that is contained in the coating raw material to a value of Ni + X that is a total amount of substances of Ni and the element X that are contained in the raw material compound is 0.0001 or more and 0.05 or less in terms of a mole ratio, provided that the element X is one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P.

[27] The method for producing a lithium metal composite oxide powder according to any one of [11] to [26], in which the raw material compound satisfies the following formula (II).

$$Li[Li_p(Ni_{(1-q-r)}Co_qX1_r)_{1-p}]O_2 ... \qquad (II)$$

(-0.1 $\leq$ p $\leq$ 0.2, 0 $\leq$ q $\leq$ 0.4, 0 $\leq$ r $\leq$ 0.4, and 1-q-r $\geq$ 0.3 are satisfied, and XI is one or more elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V.)

Furthermore, as the aspect of the present invention, the following aspects are exemplary examples.

[28] A positive electrode for a lithium secondary battery containing the positive electrode active material for a lithium secondary battery according to [10].

[29] A lithium secondary battery having the positive electrode for a lithium secondary battery according to [28].

[Advantageous Effects of Invention]

According to the present invention, it is possible to provide a lithium metal composite oxide powder having a suppressed self-discharge amount, a positive electrode active material for a lithium secondary battery, and a method for producing a lithium metal composite oxide powder.

[Brief Description of Drawings]

Fig. 1A is a schematic configuration view showing an example of a lithium secondary battery.
Fig. 1B is a schematic configuration view showing the example of the lithium secondary battery.
Fig. 2 is a schematic view showing a laminate that an all-solid-state lithium secondary battery of the present embodiment includes.
Fig. 3 is a schematic view showing an entire configuration of the all-solid-state lithium secondary battery of the present embodiment.

[Description of Embodiments]

**In** the present specification, "self-discharge amount" means a characteristic that, after a battery in a charged state has been stored at a high temperature, the discharge capacity after the storage decreases compared with the discharge capacity before the storage and means a difference between the discharge capacity before high-temperature storage and the discharge capacity after high-temperature storage.

In the following description, "particle" includes both a secondary particle that is an aggregate of primary particles and a primary particle that is present independently of the secondary particle.

In the present specification, "primary particle" means a particle that has no grain boundary in appearance and configures a secondary particle. In more detail, "primary particle" means a particle in which no clear grain boundary is visible from the particle surface in the case of being observed in a visual field magnified 5000 times or more and 20000 times or less with a scanning electron microscope or the like.

In the present specification, "secondary particle" is a particle formed by the aggregation of the primary particles and means a particle having a spherical or substantially spherical shape. That is, "secondary particle" is a particle in which the primary particles are an aggregate.

Usually, the secondary particle is formed by aggregating 10 or more of the primary particles. The secondary particle is an aggregate of the primary particles.

In the present specification, "single particle" is a particle that is present independently of the secondary particle and has no grain boundary in appearance at the time of being observed in a visual field magnified 20000 times with a scanning electron microscope and means, for example, a particle having a particle diameter of 0.5 $\mu$m or more. The single particle is a particle generated by the growth of a single crystal nucleus.

Primary particles aggregate to configure a secondary particle and thus do not grow to a large particle diameter, and the particle diameters are approximately 0.1 $\mu$m or more and less than 0.5 $\mu$m. In the present specification, particles having a particle diameter of less than 0.5 $\mu$m are regarded as primary particles, and particles having a particle diameter of 0.5 $\mu$m or more are regarded as single particles.

In the present specification, "layered structure" means a crystal structure in which layers formed from each of lithium atoms, transition metal atoms, and oxygen atoms are laminated.

The cumulative volume particle size of a lithium metal composite oxide powder is measured by the laser diffraction scattering method. As a specific measurement method, first, 0.1 g of a lithium metal composite oxide powder is poured into 50 ml of a 0.2 mass% sodium hexametaphosphate aqueous solution to obtain a dispersion liquid in which the lithium metal composite oxide powder is dispersed.

Next, the particle size distribution of the obtained dispersion liquid is measured using a laser diffraction scattering particle size distribution measuring device to obtain a volume-based cumulative particle size distribution curve.

As the laser diffraction scattering particle size distribution measuring device, for example, Microtrac MT3300EXII manufactured by MicrotracBEL Corp. can be used.

In addition, in the obtained cumulative particle size distribution curve, the value of the particle diameter at a point where the cumulative volume from the fine particle side reaches 50% when the entire horizontal axis is set to 100% is defined as $D_{50}$ ($\mu$m) that is the 50% cumulative volume particle size.

In addition, the value of the particle diameter at a point where the cumulative volume from the fine particle side reaches 10% when the entire horizontal axis is set to 100% is defined as $D_{10}$ ($\mu$m) that is the 10% cumulative volume particle size.

In addition, the value of the particle diameter at a point where the cumulative volume from the fine particle side reaches 90% when the entire horizontal axis is set to 100% is defined as $D_{90}$ ($\mu$m) that is the 90% cumulative volume particle size.

<Lithium metal composite oxide powder>

A lithium metal composite oxide powder of the present embodiment has a layered structure. The lithium metal composite oxide powder of the present embodiment contains at least Li, Ni, and an element X.

The element X is one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P.

<<R>>

In the lithium metal composite oxide powder of the present embodiment, R is defined as follows.

R is a value of O/(Ni + X) that is a mole ratio of the amount of a substance of oxygen, which is indicated by O, to the total amount of substances of nickel and the element X, which is indicated by Ni + X, in one particle of a lithium metal composite oxide that is contained in the lithium metal composite oxide powder.

R means the amount of a substance of an oxygen atom with respect to the total amount of substances of a nickel atom and the element X in the surface region of the lithium metal composite oxide powder. Here, "surface region of lithium metal composite oxide powder" refers to a 5 nm-thick region in the depth direction from the outermost surface of the lithium metal composite oxide powder.

In the present embodiment, "the value of R is large" means that a surface region in which there are an excessively large number of oxygen atoms is formed on the surface of the lithium metal composite oxide powder. In addition, this means that a surface region in which nickel or the element X is deficient is formed.

In a case where the lithium metal composite oxide powder has core particles and a coating material as described below, "the value of R is large" means that a portion in which the coating material is not present, that is, the area where the core particles are exposed is small.

In the present embodiment, "the value of R is small" means that a surface region in which there are an excessively small number of oxygen atoms is formed on the surface of the lithium metal composite oxide powder. In addition, this means that a surface region in which nickel or the element X is excessively present is formed.

In a case where the lithium metal composite oxide powder has core particles and a coating material as described below, "the value of R is small" means that a portion in which the coating material is not present, that is, the area where the core particles are exposed is large.

In the cumulative frequency distribution curve of R that is defined above, when the entire horizontal axis is set to 100%, the value of R at a point where the cumulative frequency from the small R side reaches 90% is defined as R(90).

In the lithium metal composite oxide powder of the present embodiment, R(90) is 1.7 or more and 3.7 or less.

The method for obtaining the cumulative frequency distribution curve of R in the present embodiment will be described below.

The amounts of the substances of nickel, the element X, and oxygen in one particle of the lithium metal composite oxide are obtained by energy-dispersive X-ray (EDX) spectroscopy in which the accelerating voltage is set to 1100 V.

An EDX surface analysis for the primary particles of the lithium metal composite oxide powder is carried out on 50 particles using a scanning electron microscope (SEM) -energy-dispersive X-ray (EDX) spectrometer.

As the scanning electron microscope (SEM)-energy-dispersive X-ray (EDX) spectrometer, for example, a scanning electron microscope (SEM)-energy-dispersive X-ray (EDX) spectrometer (JSM-7900F) manufactured by JEOL Ltd. can be used.

Specifically, an SEM image of the lithium metal composite oxide powder is acquired from a visual field magnified 5000 times. Ten particles are randomly selected from particles that are included in such a visual field. This operation is carried out in five visual fields, and analyses are carried out on 50 particles.

According to the above-described EDX surface analysis, it is possible to measure R of the region having a thickness of 5 nm in the depth direction from the outermost surface of the lithium metal composite oxide powder.

In a case where the lithium metal composite oxide powder includes core particles and a coating material, the R of the coating material is measured by the EDX surface analysis.

The value of O/(Ni + X), which is the mole ratio of the amount of the substance of oxygen, which is indicated by O, to the total amount of the substances of Ni and the element X, which is indicated by Ni + X, on the surface of each particle is calculated from the obtained EDX spectrum.

The accelerating voltage at this time is set to 1100V.

Furthermore, a cumulative frequency distribution curve is created from the calculated R of the 50 particles. The value of R at a point where the cumulative frequency from the small R side reaches 90% is defined as R(90), the value of R at a point where the cumulative frequency from the small R side reaches 10% is defined as R(10), and the value of R at a point where the cumulative frequency from the small R side reaches 50% is defined as R(50).

When the lithium metal composite oxide powder is used as a positive electrode active material for a lithium secondary battery, the surface of the lithium metal composite oxide powder comes into contact with an electrolytic solution. Oxygen is desorbed from the surface of the lithium metal composite oxide powder when the lithium metal composite oxide powder comes into contact with the electrolytic solution during charging, particularly, in a high-temperature environment. The desorbed oxygen oxidatively decomposes the electrolytic solution on the particle surfaces of the lithium metal composite oxide powder.

At that time, the metal valence of Ni or the like that is contained in the lithium metal composite oxide powder in a charged state decreases in order to adjust the metal valence balance in the lithium metal composite oxide powder in association with oxygen desorption, which causes self-discharge to progress.

Since such an action occurs, in a case where there are an excessively large number of oxygen atoms on the surface of the lithium metal composite oxide powder, desorption of oxygen atoms, the consequent oxidative decomposition of the electrolytic solution, and furthermore, a decrease in the valence of metal such as Ni are accelerated, and self-discharge progresses.

On the other hand, in a case where there are an excessively small number of oxygen atoms on the surface of the lithium metal composite oxide powder, the layered structure of the lithium metal composite oxide powder is not sufficiently formed.

When the layered structure is not sufficiently formed, the crystal structure on the surface of the lithium metal composite oxide powder is likely to be disordered during charging. In this case, the disordered crystals hinder the desorption and insertion of lithium, the lithium element is not effectively utilized, and there are cases where the battery capacity becomes low. In addition, when the crystal structure is disordered, configuration elements are likely to be deficient on the surface of the lithium metal composite oxide powder, and self-discharge progresses.

In the present embodiment, R(90) is set in a specific range, and the amount of oxygen atoms present on the surface of the lithium metal composite oxide powder is controlled.

In the present embodiment, R(90) is preferably 1.9 or more, more preferably 2.0 or more, and still more preferably 2.1 or more. In addition, R(90) is preferably 3.5 or less, more preferably 3.2 or less, and still more preferably 3.0 or less.

The upper limit value and the lower limit value of R(90) can be randomly combined. In the present embodiment, R(90) is preferably 1.9 or more and 3.5 or less, more preferably 2.0 or more and 3.2 or less, and still more preferably 2.1 or more and 3.0 or less.

When R(90) is the above-described upper limit value or less, that is, 3.5 or less, it means that there are a small number of particles of the lithium metal composite oxide powder having an excessive proportion of oxygen atoms that are present on the surface of the lithium metal composite oxide powder. In this case, the amount of oxygen that is desorbed from the surface of the lithium metal composite oxide powder during charging is small, and self-discharge in association with the oxidative decomposition of the electrolytic solution is less likely to progress.

When R(90) is the above-described lower limit value or more, that is, 1.9 or more, it means that a regular layered structure is formed on the surface of the lithium metal composite oxide powder. Therefore, deficiency of configuration elements or trapping of lithium is less likely to occur, and self-discharge is less likely to progress.

In the lithium metal composite oxide powder of the present embodiment, R(10) is preferably 1.1 or more and 3.3 or less. The R(10) is preferably 1.3 or more, more preferably 1.5 or more, and still more preferably 1.7 or more. In addition, the R(10) is preferably 3.0 or less, more preferably 2.7 or less, and still more preferably 2.4 or less.

The upper limit value and the lower limit value of R(10) can be randomly combined. In the present embodiment, R(10) is preferably 1.3 or more and 3.0 or less, more preferably 1.5 or more and 2.7 or less, and still more preferably 1.7 or more and 2.4 or less.

When R(10) is in the above-described range, it means that, since the number of oxygen atoms is excessively small, the abundance of the lithium metal composite oxide powder in which the crystal structure is disordered is small. In such a case, it means that a regular layered structure is formed on the surface of the lithium metal composite oxide powder. Therefore, deficiency of configuration elements is less likely to occur, and self-discharge is less likely to progress.

In the lithium metal composite oxide powder of the present embodiment, R(50) is preferably 1.5 or more and 2.7 or less. R(50) is preferably 1.7 or more, more preferably 1.9 or more, and still more preferably 2.0 or more. In addition, R(50) is preferably 2.6 or less, more preferably 2.5 or less, and still more preferably 1.4 or less.

The upper limit value and the lower limit value of R(50) can be randomly combined. In the present embodiment, R(50) is preferably 1.7 or more and 2.6 or less, more preferably 1.9 or more and 2.5 or less, and still more preferably 2.0 or more and 2.4 or less.

When R(50) is in the above-described range, it means that the abundance of oxygen atoms on the surface of the lithium metal composite oxide powder is appropriately controlled and the amount of impurities formed that do not contribute to charging and discharging is small. As these impurities, oxides that do not contain lithium are exemplary examples. Since there are a small number of impurities, resistance during charging and discharging can be reduced.

(Layered structure)

In the present embodiment, the crystal structure of the lithium metal composite oxide powder is a layered structure and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is more preferably a hexagonal crystal structure belonging to the space group R-3m or a monoclinic crystal structure belonging to C2/m and particularly preferably a hexagonal crystal structure belonging to the space group R-3m.

«Composition formula (I)»

The lithium metal composite oxide powder of the present embodiment is preferably represented by the following composition formula (I).

$$Li[Li_m(Ni_{(1-n)}X_n)_{1-m}]O_2 \dots \qquad (I)$$

$(-0.1 \leq m \leq 0.2 \text{ and } 0 < n \leq 0.7.)$

From the viewpoint of obtaining a lithium secondary battery having favorable cycle characteristics, m in the composition formula (II) is preferably more than 0, more preferably 0.01 or more, and still more preferably 0.02 or more. In addition, from the viewpoint of obtaining a lithium secondary battery having a higher initial coulombic efficiency, m in the composition formula (I) is preferably 0.1 or less, more preferably 0.08 or less, and still more preferably 0.06 or less.

The upper limit value and the lower limit value of m can be randomly combined together.

As the combination of the upper limit value and the lower limit value of m, $0 < m \leq 0.2$, $0 < m \leq 0.1$, $0.01 \leq m \leq 0.08$, and $0.02 \leq m \leq 0.06$ are exemplary examples.

In the present embodiment, $0 < m \leq 0.2$ is preferable, and $0 < m \leq 0.1$ is more preferable.

From the viewpoint of obtaining a lithium secondary battery having a high discharge capacity, in the composition formula (I), the upper limit of n is 0.7 or less, preferably 0.5 or less, more preferably 0.45 or less, and particularly preferably 0.2 or less. In addition, the lower limit of n is more than 0, preferably 0.05 or more, more preferably 0.10 or more, and particularly preferably 0.12 or more.

The upper limit value and the lower limit value of n can be randomly combined together.

As the combination of the upper limit value and the lower limit value of n, $0.05 \leq n \leq 0.5$, $0.10 \leq n \leq 0.45$, and $0.12 \leq n \leq 0.2$ are exemplary examples.

<<Composition formula (I)-1>>

From the viewpoint of enhancing the effect of the present application, the lithium metal composite oxide powder of the present embodiment is preferably represented by the following composition formula (I)-1.

$$Li[Li_{m1}(Ni_{(1-n12-n13-n14)}CO_{n12}X1_{n13}M1_{n14})_{1-m1}]O_2 \dots \qquad (I)\text{-}1$$

$(-0.1 \leq m1 \leq 0.2, 0 \leq n12 \leq 0.4, 0 \leq n13 \leq 0.4, 0 \leq n14 \leq 0.05,$ and $0 < n12 + n13 + n14 \leq 0.7$ are satisfied, XI is one or more elements selected from the group consisting of Mn, Fe, Cu, Ti, Mg, Ca, Sr, Ba, Al, W, Mo, Zn, Sn, Zr, Cr, Ga, Ge, Pd, Ag, Cd, In, and V, and M1 is one or more elements selected from the group consisting of B, Si, S, Nb, F, and P.)

From the viewpoint of obtaining a lithium secondary battery having favorable cycle characteristics, m1 in the composition formula (I)-1 is preferably more than 0, more preferably 0.01 or more, and still more preferably 0.02 or more. In addition, from the viewpoint of obtaining a lithium secondary battery having a higher initial coulombic efficiency, m1 in the composition formula (I)-1 is preferably 0.1 or less, more preferably 0.08 or less, and still more preferably 0.06 or less.

The upper limit value and the lower limit value of m1 can be randomly combined together.

As examples of the combination of the upper limit value and the lower limit value of m1, $0 < m1 \leq 0.2$, $0 < m1 \leq 0.1$, $0.01 \leq m1 \leq 0.08$, and $0.02 \leq m1 \leq 0.06$ are exemplary examples.

In the present embodiment, $0 < m1 \leq 0.2$ is preferable, and $0 < m1 \leq 0.1$ is more preferable.

From the viewpoint of obtaining a lithium secondary battery having a high discharge capacity, in the composition formula (I)-1, the upper limit of n12 + n13 + n14 is 0.7 or less, preferably 0.5 or less, more preferably 0.45 or less, and particularly preferably 0.2 or less. In addition, the lower limit of n12 + n13 + n14 is more than 0, more preferably 0.05 or more, still more preferably 0.10 or more, and particularly preferably 0.12 or more.

The upper limit value and the lower limit value of n12 + n13 + n14 can be randomly combined together.

As examples of the combination of the upper limit value and the lower limit value of n12 + n13 + n14, 0 < n12 + n13 + n14 ≤ 0.7, 0.05 ≤ n12 + n13 + n14 ≤ 0.5, 0.10 ≤ n12 + n13 + n14 ≤ 0.45, and 0.12 ≤ n12 + n13 + n14 ≤ 0.2 are exemplary examples.

In addition, from the viewpoint of obtaining a lithium secondary battery having a low battery internal resistance, n12 in the composition formula (I)-1 is preferably more than 0, more preferably 0.005 or more, still more preferably 0.01 or more, and particularly preferably 0.05 or more. In addition, from the viewpoint of obtaining a lithium secondary battery having high thermal stability, n12 in the composition formula (I)-1 is preferably 0.37 or less, more preferably 0.35 or less, and still more preferably 0.33 or less.

The upper limit value and the lower limit value of n12 can be randomly combined together.

As examples of the combination of the upper limit value and the lower limit value of n12, 0 < n12 ≤ 0.4, 0.005 ≤ n12 ≤ 0.37, 0.01 ≤ n12 ≤ 0.35, and 0.05 ≤ n12 ≤ 0.33 are exemplary examples.

In the present embodiment, 0 < n12 ≤ 0.4 is preferable.

In addition, from the viewpoint of obtaining a lithium secondary battery having high cycle characteristics, n13 in the composition formula (I)-1 is preferably 0.01 or more, more preferably 0.02 or more, and still more preferably 0.04 or more. In addition, from the viewpoint of obtaining a lithium secondary battery having high preservability at high temperatures (for example, in an environment at 60°C), n13 in the composition formula (I)-1 is preferably 0.30 or less, more preferably 0.25 or less, and still more preferably 0.20 or less.

The upper limit value and the lower limit value of n13 can be randomly combined together.

As examples of the combination of the upper limit value and the lower limit value of n13, 0.01 ≤ n13 ≤ 0.30, 0.02 ≤ n13 ≤ 0.25, and 0.04 ≤ n13 ≤ 0.20 are exemplary examples.

In addition, from the viewpoint of obtaining a lithium secondary battery having a low battery internal resistance, n14 in the composition formula (I)-1 is preferably more than 0, more preferably 0.0005 or more, and still more preferably 0.001 or more. In addition, from the viewpoint of obtaining a lithium secondary battery having a large discharge capacity at a high current rate, n14 in the composition formula (I)-1 is preferably 0.04 or less, more preferably 0.03 or less, and still more preferably 0.02 or less.

The upper limit value and the lower limit value of n14 can be randomly combined together.

As examples of the combination of the upper limit value and the lower limit value of n14, 0 < n14 ≤ 0.04, 0.0005 ≤ n14 ≤ 0.03, and 0.001 ≤ n14 ≤ 0.02 are exemplary examples.

XI in the composition formula (I)-1 represents one or more metal elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V.

In addition, XI in the composition formula (I)-1 is preferably one or more metal elements selected from the group consisting of Mn, Ti, Mg, Al, W, Nb, and Zr from the viewpoint of obtaining a lithium secondary battery having high cycle characteristics and preferably one or more metal elements selected from the group consisting of Al, W, Nb, and Zr from the viewpoint of obtaining a lithium secondary battery having high thermal stability.

M1 in the composition formula (I)-1 represents one or more elements selected from the group consisting of B, Si, S, F, and P.

In addition, from the viewpoint of obtaining a lithium secondary battery having a low internal resistance of the battery, M2 in the composition formula (I)-1 is preferably one or more elements selected from the group consisting of B, Nb, and P and is preferably one or more elements selected from the group consisting of B and P.

In the present embodiment, the composition of the lithium metal composite oxide powder can be confirmed by dissolving the obtained lithium metal composite oxide powder in hydrochloric acid and then carrying out an analysis using an inductively coupled plasma emission spectrometer.

As the inductively coupled plasma emission spectrometer, it is possible to use, for example, SPS3000 manufactured by Seiko Instruments Inc.

«Coating material»

The lithium metal composite oxide powder of the present embodiment preferably includes core particles and a coating material that coats the core particles.

In more detail, the lithium metal composite oxide powder of the present embodiment preferably includes core particles, which are particles that serve as a core, and a coating material that coats the surfaces of the core particles.

The coating material contains a compound obtained by a reaction between an element M and lithium. In the present embodiment, the core particles are primary particles and secondary particles in the lithium metal composite oxide powder and contain at least Li, Ni, and the element X.

In the present embodiment, "coating" means that the coating material is present on a part or all of the surfaces of the core particles. In a case where a part of the surfaces of the core particles are coated with the coating material, the coating material is preferably distributed in a region that is at least 50% or more of the surfaces of the core particles and more preferably distributed in a region of 70% or more.

Regarding a layer of the coating material, coating layers having a uniform thickness are preferably formed on the surfaces of the core particles.

The coating material is preferably a coating layer or coating particles. The coating material preferably contains a lithium-containing composite compound having Li and the element M. The element M is preferably one or more elements selected from the group consisting of Al, Zr, and M1 in the composition formula (I)-1, more preferably one or more elements selected from the group consisting of Al, Zr, B, Nb, and P, still more preferably one or more elements selected from the group consisting of B, Nb, and P, and particularly preferably one or more elements selected from the group consisting of B and P.

The coating material preferably contains a lithium-containing composite compound. From the viewpoint of reducing the resistance of batteries, the lithium-containing composite compound is more preferably a lithium-containing composite oxide. As the lithium-containing composite oxide, a lithium-boron-oxygen compound, a lithium-niobium-oxygen compound, and a lithium-phosphorus-oxygen compound are exemplary examples.

The lithium-containing composite compound is crystalline or amorphous and is preferably amorphous. When the core particles are coated with an amorphous lithium-containing composite compound, the core particles and the coating material are favorably joined, dropping of the coating material caused by the expansion and contraction of the core particles in association with charging and discharging reaction is suppressed, and the charge and discharge cycle characteristics are excellent. Whether the lithium-containing composite compound is crystalline or amorphous can be confirmed by observation with a transmission electron microscope.

From the viewpoint of enhancing the effect of the present invention, M/(Ni + X), which is a ratio of the amount of a substance of the element M in the coating material to the sum (Ni + X) of the amounts of the substances of Ni and the element X in the composition formula (I), in the lithium metal composite oxide powder is preferably 0.05 mol% or more and 5 mol% or less. M/(Ni + X) is more preferably 4 mol% or less, still more preferably 3 mol% or less, and particularly preferably 2 mol% or less. M/(Ni + X) is more preferably 0.1 mol% or more, still more preferably 0.2 mol% or more, and particularly preferably 0.3 mol% or more. The upper limit value and the lower limit value of M/(Ni + X) can be randomly combined together.

As examples of the combination of M/(Ni + X), 0.1 mol% or more and 4 mol% or less, 0.2 mol% or more and 3 mol% or less, and 0.3 mol% or more and 2 mol% or less are exemplary examples.

In the present embodiment, the composition of the coating material can be confirmed using a scanning transmission electron microscope (STEM)-energy-dispersive X-ray spectroscopy (EDX) element line analysis, inductively coupled plasma emission spectrometry, an electron beam microanalyzer analysis, electron energy loss spectroscopy line analysis (EELS line analysis), or the like of the cross section of a secondary particle. In the electron energy loss spectroscopy line analysis (EELS line analysis), for example, the lithium metal composite oxide powder is sliced using a focused ion beam (FIB) device, the obtained cross section of the lithium metal composite oxide powder is observed with an analysis electron microscope (for example, ARM200F manufactured by JEOL Ltd.), and an EELS line analysis of the coating material in a direction toward the inside of the lithium metal composite oxide powder from the outermost surface of the lithium metal composite oxide powder is carried out using an EELS detector (for example, Quantum ER manufactured by Gatan, Inc.), whereby the composition (particularly, the presence or absence of Li and the element M) of the coating material can be confirmed.

The crystal structure of the coating layer or the coating particle can be confirmed using powder X-ray diffraction or electron beam diffraction.

The powder X-ray diffraction measurement is carried out using an X-ray diffractometer (Ultima IV manufactured by Rigaku Corporation). Specifically, the lithium metal composite compound powder is loaded into a dedicated substrate, and measurement is carried out using a Cu-K$\alpha$ radiation source under conditions of a diffraction angle of $2\theta$ = 10° to 90°, a sampling width of 0.02°, and a scan speed of 4 °/min, whereby a powder X-ray diffraction pattern is obtained, and the crystal structure of the coating layer or the coating particle is confirmed from the obtained powder X-ray diffraction pattern.

In the present embodiment, the lithium metal composite oxide powder preferably contains single particles.

Since primary particles aggregate to configure a secondary particle, the particles do not grow to be large, and the particle diameters are approximately 0.1 $\mu$m or more and less than 0.5 $\mu$m. In the present specification, particles having an average particle diameter of less than 0.5 $\mu$m are regarded as primary particles, and particles having an average particle diameter of 0.5 $\mu$m or more are regarded as single particles. That is, particles having no grain boundaries in appearance are made up of "primary particles" having small particle diameters and "single particles" having equal or large particle diameters compared with a particle diameter of 0.5 $\mu$m as a criterion.

In addition, compared with a fine primary particle or a secondary particle formed by aggregation of primary particles, the single particle has a small surface energy and excellent stability. Therefore, it is presumed that, on the surface of the single particle, an irreversible reaction such as decomposition of the electrolytic solution is suppressed and the single particles become a lithium metal composite oxide powder in which self-discharge is less likely to occur.

From the viewpoint of suppressing self-discharge, the proportion of the number of single particles in all particles that are contained in the lithium metal composite oxide powder is preferably 20% or more, more preferably 30% or more, and particularly preferably 50% or more. The upper limit thereof is not particularly limited, but is 100% or less and preferably 90% or less. Here, "all particles" refer to the total of the numbers of particles of primary particles, secondary particles, and single particles.

In the lithium metal composite oxide powder of the present embodiment, it is preferable that, in $D_{10}$ that is a 10% cumulative diameter, $D_{50}$ that is a 50% cumulative diameter, and $D_{90}$ that is a 90% cumulative diameter, all of which are obtained from the particle size distribution measurement values of all particles that are included in the lithium metal composite oxide powder, that is, primary particles, secondary particles, and single particles, $D_{50}$ that is the 50% cumulative diameter is 0.5 $\mu$m or more and 10 $\mu$m or less, and furthermore, $D_{90}$, $D_{10}$, and $D_{50}$ satisfy the relationship of the following formula (A).

$$0.3 \leq (D_{90} - D_{10}) / D_{50} \leq 3 \ ... \ (A)$$

The lower limit value of $D_{50}$ that is the 50% cumulative diameter, is preferably 1.0 $\mu$m or more, more preferably 1.5 $\mu$m or more, and still more preferably 2.0 $\mu$m or more. The upper limit value of $D_{50}$ that is the 50% cumulative diameter, is preferably 8.0 $\mu$m or less, more preferably 6.0 $\mu$m or less, and still more preferably 5.0 $\mu$m or less.

The upper limit value and the lower limit value of $D_{50}$ that is the 50% cumulative diameter, can be randomly combined. In the present embodiment, $D_{50}$ that is the 50% cumulative diameter, is preferably 1.0 $\mu$m or more and 8.0 $\mu$m or less, more preferably 1.5 $\mu$m or more and 6.0 $\mu$m or less, and still more preferably 2.0 $\mu$m or more and 5.0 $\mu$m or less.

The lower limit value of $(D_{90} - D_{10}) / D_{50}$, which is the relationship represented by the formula (A), is preferably 0.4 or more, more preferably 0.5 or more, and particularly preferably 0.6 or more. The upper limit value of $(D_{90} - D_{10}) / D_{50}$, which is the relationship represented by the formula (A), is preferably 2.5 or less, more preferably 2.0 or less, and particularly preferably 1.5 or less.

The upper limit value and the lower limit value of $(D_{90} - D_{10}) / D_{50}$, which is the relationship represented by the formula (A), can be randomly combined. In the present embodiment, $(D_{90} - D_{10}) / D_{50}$, which is the relationship represented by the formula (A), is preferably 0.4 or more and 2.5 or less, more preferably 0.5 or more and 2.0 or less, and particularly preferably 0.6 or more and 1.5 or less.

The self-discharge rate of the lithium metal composite oxide powder that is calculated by the following method is preferably 14% or less and more preferably 12% or less.

A lithium secondary battery (coin-type cell) is produced using the lithium metal composite oxide powder of the present embodiment as a positive electrode active material.

A paste-form positive electrode mixture is prepared by adding and kneading the lithium metal composite oxide powder of the present embodiment, a conductive material (acetylene black), and a binder (PVdF) to obtain a composition of 92:5:3 (mass ratio). At the time of adjusting the positive electrode mixture, for example, N-methyl-2-pyrrolidone is used as an organic solvent.

The obtained positive electrode mixture is applied to a 40 $\mu$m-thick Al foil, which is to serve as a current collector, and dried in a vacuum at 150°C for eight hours, thereby obtaining a positive electrode for the lithium secondary battery. The electrode area of this positive electrode for the lithium secondary battery is, for example, 1.65 cm$^2$.

The lithium secondary battery is produced using the obtained positive electrode for the lithium secondary battery. The produced lithium secondary battery is regarded as a coin-type battery R2032. Hereinafter, this battery will be referred to as "coin-type battery".

The positive electrode for the lithium secondary battery is placed on the lower lid of a coin cell for the coin-type battery R2032 (for example, manufactured by Hohsen Corp.) with the aluminum foil surface facing downward, and a laminate film separator (a heat-resistant porous layer laminated (thickness: 25 $\mu$m) on a polypropylene porous film) is placed on the positive electrode. An electrolytic solution (300 $\mu$L) is poured thereinto. The electrolytic solution that is used is prepared by dissolving $LiPF_6$ in a liquid mixture of ethylene carbonate, dimethyl carbonate, and ethyl methyl carbonate in a volume ratio of 30:35:35 to reach 1.0 mol/L.

Next, lithium metal is used as a negative electrode, the negative electrode is placed on the upper side of the laminate film separator, and the upper lid is placed through a gasket and caulked using a caulking machine, thereby producing the lithium secondary battery.

Furthermore, a test is carried out as described below using the obtained coin-type battery.

The coin-type battery is charged at a testing temperature of 25°C with a maximum charging voltage of 4.4 V and a charging current of 0.5 CA in a constant current constant voltage mode until the current value reaches 0.05 CA.

After that, the coin-type battery is constant-current-discharged up to 2.5 V with a discharge current value of 0.5 CA, and a discharge capacity before storage is measured.

Next, the coin-type battery is charged at a testing temperature of 25°C with a maximum charging voltage of 4.4 V and a charging current of 0.5 CA in the constant current constant voltage mode until the current value reaches 0.05 CA, and then the coin-type battery in a charged state is stored at a testing temperature of 60°C for seven days.

After the storage, the coin-type battery is constant-current-discharged at 25°C up to 2.5 V at a discharge current value of 0.5 CA, and the storage capacity is measured. The self-discharge rate is calculated from the following formula.

$$\text{Self-discharge rate (\%)} = (\text{storage capacity} / \text{discharge capacity before storage}) \times 100$$

<Positive electrode active material for lithium secondary battery>

The present embodiment is a positive electrode active material for a lithium secondary battery containing the lithium metal composite oxide powder of the present invention.

<Method for producing lithium metal composite oxide powder>

A method for producing a lithium metal composite oxide powder of the present embodiment includes the following steps (a) to (c) in the following order.

Step (a) A step of mixing a precursor containing at least Ni and a lithium compound containing lithium and calcining the mixture to obtain a raw material compound.

Step (b) A step of bringing a coating raw material containing at least one element M selected from the group consisting of Al, B, Si, S, Nb, F, and P and the raw material compound into contact with each other to obtain a raw material mixture.

Step (c) A step of heating the raw material mixture at a temperature of 200°C or higher and 600°C or lower.

[Step (a)]

The step (a) is a step of mixing a precursor containing at least Ni and a lithium compound and calcining the mixture to obtain a raw material compound. The raw material compound means a calcined product of the precursor and the lithium compound.

· Precursor

In the production of the lithium metal composite oxide powder, first, a precursor containing at least Ni is produced. Hereinafter, a precursor containing at least Ni will be referred to as "precursor" or "composite metal compound" in some cases.

The precursor is preferably a composite metal compound containing Ni and the element X and more preferably a composite metal compound containing Ni, Co, and an element XI. The element XI is one or more elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V. As the composite metal compound, a composite metal hydroxide or a composite metal oxide is preferable.

(Step of producing composite metal compound)

Usually, the composite metal compound can be produced by a well-known batch coprecipitation method or continuous coprecipitation method. Hereinafter, the production method will be described in detail using a composite metal hydroxide containing nickel, cobalt, and manganese as metals as an example.

First, a nickel salt solution, a cobalt salt solution, a manganese salt solution, and a complexing agent are reacted with one another by a coprecipitation method, particularly, the continuous coprecipitation method described in Japanese Unexamined Patent Application, First Publication No. 2002-201028, thereby producing a nickel cobalt manganese composite metal hydroxide represented by $Ni_{(1-n12-n13)}Co_{n12}Mn_{n13}(OH)_2$.

A nickel salt, which is the solute of the nickel salt solution, is not particularly limited, and, for example, any one or more of nickel sulfate, nickel nitrate, nickel chloride, and nickel acetate can be used.

As a cobalt salt, which is the solute of the cobalt salt solution, for example, any one or more of cobalt sulfate, cobalt nitrate, and cobalt chloride can be used.

As a manganese salt, which is a solute of the manganese salt solution, for example, any one or more of manganese sulfate, manganese nitrate, and manganese chloride can be used.

The above-described metal salts are used at proportions corresponding to the composition ratio of $Ni_{(1-n12-n13)}Co_{n12}Mn_{n13}(OH)_2$. That is, the individual metal salts are used in amounts in which the mole ratio among nickel in the solute of the nickel salt solution, cobalt in the solute of the cobalt salt solution, and manganese in the solute of the manganese salt solution corresponds to the composition ratio of $Ni_{(1-n12-n13)}CO_{n12}Mn_{n13}(OH)_2$ and becomes (1-n12-n13):n12:n13.

In addition, as the solvents of the nickel salt solution, the cobalt salt solution, and the manganese salt solution, water is used.

The complexing agent is an agent capable of forming a complex with ions of nickel, cobalt, and manganese in aqueous solutions. Examples thereof include an ammonium ion feeder, hydrazine, ethylenediaminetetraacetic acid, nitrilotriacetic acid, uracil diacetic acid, and glycine. The complexing agent may or may not be contained. In a case where the complexing agent is contained, for example, the mole ratio of the amount of the complexing agent that is contained in the liquid mixture containing the metal salt solutions of the elements X and the complexing agent to the total of the mole numbers of the metal salts of the elements X is more than 0 and 2.0 or less.

As the ammonium ion feeder, ammonium salts such as ammonium hydroxide, ammonium sulfate, ammonium chloride, ammonium carbonate and ammonium fluoride are exemplary examples.

In the coprecipitation method, in order to adjust the pH value of the liquid mixture containing the nickel salt solution, a random metal salt solution, and the complexing agent, an alkali metal hydroxide is added to the liquid mixture before the pH of the liquid mixture turns from alkaline into neutral. The alkali metal hydroxide is, for example, sodium hydroxide or potassium hydroxide.

The value of the pH in the present specification is defined as a value measured when the temperature of the liquid mixture is 40°C. The pH of the liquid mixture is measured when the temperature of the liquid mixture sampled from a reaction vessel reaches 40°C. In a case where the sampled liquid mixture is lower than 40°C, the liquid mixture is heated up to 40°C and the pH is measured. In a case where the sampled liquid mixture exceeds 40°C, the pH of the liquid mixture cooled to 40°C is measured.

When the complexing agent in addition to the nickel salt solution, the cobalt salt solution, and the manganese salt solution is continuously supplied to the reaction vessel, nickel, cobalt, and manganese react with one another, and $Ni_{(1-n12-n13)}Co_{n12}Mn_{n13}(OH)_2$ is generated.

At the time of the reaction, the temperature of the reaction vessel is controlled in a range of, for example, 20°C or higher and 80°C or lower and preferably 30°C or higher and 70°C or lower.

In addition, at the time of the reaction, the pH value in the reaction vessel is controlled in a range of, for example, 9 or higher and 13 or lower and preferably 11 or higher and 13 or lower.

The substances in the reaction vessel are appropriately stirred and mixed together.

As the reaction vessel that is used in the continuous coprecipitation method, it is possible to use a reaction vessel in which the formed reaction product is caused to overflow for separation.

When the metal salt concentrations, stirring speeds, reaction temperatures, and reaction pHs of the metal salt solutions that are supplied to the reaction vessel, calcining conditions, which will be described below, and the like are appropriately controlled, it is possible to control a variety of physical properties of a lithium metal composite oxide powder to be obtained in the end in desired ranges.

In detail, the inside of the reaction vessel may be an inert atmosphere. An inert atmosphere inside the reaction vessel suppresses, among the metals that are contained in the liquid mixture, a metal that is more easily oxidized than nickel being aggregated earlier than nickel. Therefore, a uniform metal composite hydroxide can be obtained.

In addition, the inside of the reaction vessel may be an appropriate oxidizing atmosphere. The oxidizing atmosphere may be an oxygen-containing atmosphere formed by mixing an oxidizing gas into an inert gas, and, when the inside of the reaction vessel, in which an oxidizing agent may be present in an inert gas atmosphere, is an appropriate oxidizing atmosphere, a transition metal that is contained in the liquid mixture is appropriately oxidized, which makes it easy to control the form of the metal composite oxide.

As the oxidizing agent, it is possible to use a peroxide such as hydrogen peroxide, a peroxide salt such as permanganate, perchlorate, hypochlorite, nitric acid, halogen, ozone, or the like.

As oxygen or the oxidizing agent in the oxidizing atmosphere, a sufficient number of oxygen atoms need to be present in order to oxidize the transition metal.

In a case where the oxidizing atmosphere is an oxygen-containing atmosphere, the atmosphere in the reaction vessel can be controlled by a method in which an oxidizing gas is bubbled or the like in the liquid mixture that aerates the oxidizing gas into the reaction vessel.

After the above-described reaction, the obtained reaction product is washed with water and then dried, thereby obtaining a nickel cobalt manganese composite metal hydroxide as a nickel cobalt manganese composite metal compound.

In addition, in a case where impurities derived from the liquid mixture remain in the reaction product that is washed with only water, the reaction product may be washed with a weak acid water or an alkaline solution as necessary. As the alkaline solution, an aqueous solution containing sodium hydroxide or potassium hydroxide is an exemplary example.

In the above-described example, the nickel cobalt manganese composite metal hydroxide has been produced, but a nickel cobalt manganese composite metal oxide may be prepared.

When a composite metal oxide is adjusted from the composite metal hydroxide, an oxide production step of producing an oxide by calcining the composite metal hydroxide at a temperature of 300°C or higher and 800°C or lower in a range of one hour or longer and 10 hours or shorter may be carried out.

For example, a nickel cobalt manganese composite metal oxide can be prepared by calcining the nickel cobalt manganese composite metal hydroxide. Regarding the calcining time, the total time taken while the temperature begins to be raised and reaches the calcining temperature and the holding of the composite metal hydroxide at the calcining temperature ends is preferably set to one hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

· Lithium compound

As the lithium compound that is used in the present invention, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

In addition, in a case where lithium hydroxide contains lithium carbonate, the content of lithium carbonate in lithium hydroxide is preferably 5 mass% or less.

The method for mixing the precursor and the lithium compound will be described.

The precursor is dried and then mixed with the lithium compound. The drying conditions are not particularly limited, and, for example, any of the following drying conditions 1) to 3) is an exemplary example.

1) Condition under which precursor is not oxidized or reduced. Specifically, a drying condition under which the precursor is dried under a condition under which an oxide remains as an oxide as it is or under a condition under which a hydroxide remains as a hydroxide as it is.

2) Condition under which precursor is oxidized. Specifically, a drying condition under which a hydroxide is oxidized to an oxide.

3) Condition under which precursor is reduced. Specifically, a drying condition under which an oxide is reduced to a hydroxide.

In order to form the condition under which the precursor is not oxidized or reduced, an inert gas such as nitrogen, helium, or argon may be used. In order to form the condition under which a hydroxide is oxidized, oxygen or an air may be used.

In addition, in order to form the condition under which the precursor is reduced, a reducing agent such as hydrazine or sodium sulfite may be used in an inert gas atmosphere.

After dried, the precursor may be appropriately classified.

The above-described lithium compound and precursor are mixed in consideration of the composition ratio of a final target product. For example, the precursor is mixed with the lithium compound such that the ratio of the number of lithium atoms to the number of metal atoms that are contained in the precursor becomes more than 1.0. That is, in the lithium metal composite oxide powder to be obtained, the lithium compound and the precursor are mixed such that the mole ratio between lithium and the total amount of the elements X exceeds one.

The ratio of the number of lithium atoms to the number of metal atoms is preferably 1.05 or more and more preferably 1.10 or more. The mixture of the precursor and the lithium compound is calcined in the subsequent calcining step, thereby obtaining a raw material compound.

The precursor and the lithium compound containing Li are mixed and calcined, thereby obtaining a calcined product.

In the calcining, a dry air, an oxygen atmosphere, an inert atmosphere, or the like is used depending on a desired composition.

The mixture may be calcined a plurality of times as necessary.

The calcining temperature of the precursor and the above-described lithium compound is not particularly limited, but is, for example, preferably 600°C or higher and 1100°C or lower and more preferably 650°C or higher and 1050°C or lower.

When the calcining temperature is the above-described lower limit value or higher, it is possible to obtain a lithium metal composite oxide powder having a strong crystal structure. In addition, when the calcining temperature is the above-described upper limit value or lower, it is possible to reduce the volatilization of lithium on the surface of the lithium metal composite oxide powder.

In the present specification, the calcining temperature means the temperature of the atmosphere in a calcining furnace and means the highest temperature of the holding temperatures in a main calcining step (hereinafter, referred to as the highest holding temperature in some cases). In a case of the main calcining step having a plurality of heating steps, the calcining temperature means a temperature at the time of heating the precursor and the liquid compound at the highest holding temperature in each of the heating steps.

The calcining time is preferably three hours or longer and 50 hours or shorter. When the calcining time exceeds 50 hours, there is a tendency that the battery performance substantially deteriorates due to the volatilization of lithium. When the calcining time is shorter than three hours, the development of crystals is poor, and there is a tendency that the battery performance becomes poor. It is also effective to carry out preliminary calcining before the above-described calcining. The temperature of the preliminary calcining is in a range of 300°C or higher and 850°C or lower, and the preliminary calcining is preferably carried out for one hour or longer and 10 hours or shorter. Here, the temperature of the preliminary calcining is carried out at a temperature lower than that of the main calcining.

In the present embodiment, the temperature rising rate in the heating step in which the highest holding temperature is reached is preferably 180 °C/hour or faster, more preferably 200 °C/hour or faster, and particularly preferably 250 °C/hour or faster.

The temperature rising rate in the heating step in which the highest holding temperature is reached is calculated from the time taken while the temperature begins to be raised and then reaches a holding temperature to be described below in a calcining device.

The calcining step preferably has a plurality of calcining steps that is carried out at different calcining temperatures. For example, the calcining step preferably has a first calcining step and a second calcining step of calcining the precursor and the lithium compound at a higher temperature than in the first calcining step. Furthermore, the calcining step may have a calcining step that is carried out at a different calcining temperature for a different calcining time.

In the present embodiment, the mixture is calcined in the presence of an inert melting agent, whereby the reaction of the mixture is accelerated, and the amount of oxygen on the particle surfaces of a lithium metal composite oxide powder to be obtained can be controlled in a preferable range. In addition, the inert melting agent may remain in the calcined lithium metal composite oxide powder or may be removed by washing the mixture with a washing liquid after the calcining. In the present embodiment, the calcined lithium metal composite oxide powder is preferably washed with pure water, an alkaline washing liquid, or the like.

In a case where the mixture is calcined in the presence of the inert melting agent, R(90) of a lithium metal composite oxide powder to be obtained can be controlled in a preferable range of the present embodiment by adjusting the holding temperature in the calcining. When the holding temperature in the calcining in the presence of the inert melting agent is adjusted, the reaction between the lithium compound and the precursor in the calcining step is accelerated, the generation of an impurity phase such as an oxygen-excessive oxide is suppressed, and a lithium metal composite oxide powder in which the amount of oxygen on the particle surfaces is controlled to an appropriate amount can be obtained.

The holding temperature in the calcining may be appropriately adjusted depending on the kind of a transition metal element used and the kind and amount of a precipitant and the inert melting agent.

In the present embodiment, the holding temperature may be set in consideration of the melting point of the inert melting agent, which will be described below and is preferably set in a range of [melting point of inert melting agent - 100°C] or higher and [melting point of inert melting agent + 100°C] or lower.

As the holding temperature, specifically, a range of 200°C or higher and 1150°C or lower is an exemplary example, and the holding temperature is preferably 300°C or higher and 1050°C or lower and more preferably 500°C or higher and 1000°C or lower.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

The inert melting agent that can be used in the present embodiment is not particularly limited as long as the inert melting agent does not easily react with the mixture during the calcining. In the present embodiment, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and

$BaF_2$(melting point: 1355°C) can be exemplary examples.

As the chloride of A, NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C), and $BaCl_2$(melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $Cs_2CO_3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $Cs_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can b exemplary examples.

Examples of the nitrate of A, $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na_3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, NaOH (melting point: 318°C), KOH (melting point: 360°C), RbOH (melting point: 301°C), CsOH (melting point: 272°C), $Ca(OH)_2$ (melting point: 408°C), $Mg(OH)_2$ (melting point: 350°C), $Sr(OH)_2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be exemplary examples.

In the present embodiment, it is also possible to use two or more of these inert melting agents. In the case of using two or more inert melting agents, there are also cases where the melting point decreases. In addition, among these inert melting agents, as an inert melting agent for obtaining a lithium metal composite oxide powder having higher crystallinity, any of the hydroxide of A, the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

In the present embodiment, in a case where one or more selected from the group consisting of potassium sulfate, sodium sulfate, and potassium carbonate is used as the inert melting agent, it is possible to control R(10) of a lithium metal composite oxide powder to be obtained in a preferable range of the present embodiment. When calcined in the presence of the inert melting agent, the mixture of the lithium compound and the precursor is sufficiently supplied with necessary oxygen through the inert melting agent during the calcining, and thus a lithium metal composite oxide powder in which oxygen deficiency on the particle surfaces is small can be obtained.

In the present embodiment, the abundance of the inert melting agent during the calcining may be appropriately selected. In order to control R(90) of a lithium metal composite oxide powder to be obtained in the range of the present embodiment, the abundance of the inert melting agent during the calcining is preferably 0.1 parts by mass or more and more preferably 1 part by mass or more with respect to 100 parts by mass of the lithium compound. In addition, an inert melting agent other than the inert melting agents exemplified above may be jointly used as necessary. As such an inert melting agent, an ammonium salt such as $NH_4Cl$ or $NH_4F$ or the like can be an exemplary example.

The raw material compound is obtained by calcining.

Pure water or an alkaline washing liquid can be used to wash the inert melting agent remaining in the calcined raw material compound.

As the alkaline washing liquid, for example, aqueous solutions of one or more anhydrides selected from the group consisting of lithium hydroxide (LiOH), sodium hydroxide (NaOH), potassium hydroxide (KOH), lithium carbonate ($Li_2CO_3$), sodium carbonate ($Na_2CO_3$), potassium carbonate ($K_2CO_3$), and ammonium carbonate ($(NH_4)_2CO_3$) and a hydrate thereof are exemplary examples. In addition, as an alkali, it is also possible to use ammonia.

The temperature of the washing liquid that is used for the washing is preferably 15°C or lower, more preferably 10°C or lower, and still more preferably 8°C or lower. When the washing liquid is controlled in a range in which the washing liquid does not freeze and in the above-described range, it is possible to suppress the excessive elution of lithium ions from the crystal structure of the raw material compound into the washing liquid during the washing.

As a method for bringing the washing liquid and the raw material compound into contact with each other in a washing step, a method in which the raw material compound is poured into and stirred in an aqueous solution of each washing liquid, a method in which the aqueous solution of each washing liquid is applied as shower water to the raw material compound, and a method in which the raw material compound is poured into and stirred in the aqueous solution of the washing liquid, then, the raw material is separated from the aqueous solution of each washing liquid, and then the aqueous solution of each washing liquid is applied as shower water to the separated raw material compound are exemplary examples.

After the washing, a step of separating the raw material compound from the washing liquid by filtration or the like and drying the raw material compound may be carried out.

The raw material compound preferably satisfies the following formula (II).

$$Li(Li_p(Ni_{(1-q-r)}Co_qX1_r)_{1-p})O_2 \ ... \qquad (II)$$

($-0.1 \leq p \leq 0.2$, $0 \leq q \leq 0.4$, $0 \leq r \leq 0.4$, and $1-q-r \geq 0.3$ are satisfied, and X1 is one or more elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V.)

In the raw material compound, the amount of surplus lithium that is obtained as a converted value from the result of neutralization titration is preferably 1 mass% or less. The amount of surplus lithium refers to the amount of a Li element calculated from the total amount of the amount of lithium carbonate and the amount of lithium hydroxide that are contained in a residual alkali that is obtained as a converted value from the result of the neutralization titration of the raw material compound. The amount of surplus lithium is the amount of lithium that is not contained in the crystal structure of the raw material compound.

When the amount of surplus lithium in the raw material compound is adjusted to the above-described range, a coating raw material, which will be described below, and surplus lithium react with each other to form a coating layer that uniformly coats the core particles, and it becomes easy to control R(90) in the range of the present embodiment.

Here, the amount of surplus lithium in the raw material compound can be measured by the following method.

20 g of the raw material compound and 100 g of pure water are fed into a 100 ml beaker and stirred for five minutes. After stirring, the raw material compound is filtered, 0.1 mol/L hydrochloric acid is added dropwise to 60 g of the remaining filtrate, and the pH of the filtrate is measured with a pH meter. The amount of hydrochloric acid added for titration at pH = $8.3 \pm 0.1$ is indicated by A ml, the amount of hydrochloric acid added for titration at pH = $4.5 \pm 0.1$ is indicated by B ml, and the amount of lithium carbonate and the amount of lithium hydroxide that remain in the raw material compound are calculated from the following calculation equation. In the following equation, the molecular weights of lithium carbonate and lithium hydroxide are calculated with an assumption that the individual atomic weights are H: 1.000, Li: 6.941, C: 12, and O: 16.

The amount of surplus lithium is obtained from the amount of lithium carbonate and the amount of lithium hydroxide.

$$\text{Amount of lithium carbonate (mass\%)} = \{0.1 \times (B - A)/1000\} \times \{73.882/(20 \times 60/100)\} \times 100$$

$$\text{Amount of lithium hydroxide (mass\%)} = \{0.1 \times (2A - B)/1000\} \times \{23.941/(20 \times 60/100)\} \times 100$$

[Step (b)]

The step (b) is a step of bringing the coating raw material containing the element M and the raw material compound into contact with each other to obtain a raw material mixture.

The element M is at least one element selected from the group consisting of Al, B, Si, S, Nb, F, and P.

The step (b) may be a step (b1) of bringing a coating raw material solution 1 containing the element M and the raw material compound into contact with each other to obtain a raw material mixture.

The step (b1) may be a step (b1-1) of bringing the coating raw material solution 1 into contact with the raw material compound by spraying to obtain a raw material mixture.

The step (b) may be a step (b2) of immersing the raw material compound in a coating raw material solution 2 containing the element M and lithium to obtain a raw material mixture.

The step (b) may be a step (b3) of bringing a powder-form coating raw material containing the element M into contact with a powder-form raw material compound to obtain a raw material mixture.

When the step (b) is carried out, it becomes easy to control R(90) in the range of the present embodiment. When the step (b1) or (b3) is carried out, it becomes easy to control R(10) and R(50) in more preferable ranges.

· Coating raw material

The coating raw material preferably contains a coating compound containing at least one element selected from the group consisting of Al, B, Si, S, Nb, F, and P. As the coating compound, it is possible to use for example, any one of $Al_2O_3$, $H_3BO_3$, $HBO_2$, $H_2B_4O_7$, $HB_5O_8$, $B_2O_3$, $H_4SiO_4$, $H_2SiO_3$, $H_2Si_2O_5$, $SiO_2$, $H_2SO_4$, $H_2SO_3$, $H_2S_2O_3$, $H_2SO_6$, $H_2SO_8$, $Nb_2O_5$, $LiF$, $H_3PO_4$, $H_4P_2O_7$, $H_3PO_3$, $H_3PO_2$, and $Li_3PO_4$ or two or more thereof in a mixture form. Among these, $H_3BO_3$, $B_2O_3$, $Nb_2O_5$, or $Li_3PO_4$ is preferable.

· Step (b1)

A case where the step (b) is the step (b1) of bringing a coating raw material solution 1 containing the element M and the raw material compound into contact with each other to obtain a raw material mixture will be described.
In the step (b1), the coating compound may be used in a solution state formed by dispersing and dissolving the coating compound in a solvent (coating raw material solution 1). As the solvent of the coating raw material solution, water or an organic solvent can be used, and water is preferable.
In the case of using the coating raw material solution 1 as the coating raw material, as a method for bringing the coating raw material solution 1 and the raw material compound into contact with each other, the following methods are exemplary examples.

·· A method in which the raw material compound is immersed in the coating raw material solution 1. Here, "immersing" includes pouring the raw material compound into the coating raw material solution 1 or pouring and then stirring the raw material compound.
·· A method in which the coating raw material solution 1 is applied as a shower liquid to the raw material compound.
·· A method in which the coating raw material solution 1 is sprayed as a spray liquid to the raw material compound.
·· A method in which, after the raw material compound is immersed in the coating raw material solution 1, the raw material compound is separated from the coating raw material solution 1. Next, the coating raw material solution 1 is applied as a shower liquid to and brought into contact with the separated raw material compound to obtain a raw material mixture.

In the case of using the coating raw material solution 1 as the coating raw material, after the step (b1) and before the step (c), which will be described below, a step (b1-A) of removing the solvent that is contained in the raw material mixture and adjusting the content rate of the solvent in the raw material mixture to 30 mass% or less is preferably provided.
The content rate of the solvent that is contained in the raw material mixture is more preferably 25 mass% or less and particularly preferably 20 mass% or less.
In this case, the step (a), the step (b1), the step (b1-A), and the step (c) are provided in this order.
In the case of using the coating raw material solution 1 as the coating raw material, "the method in which the raw material compound is brought into contact with the coating raw material solution 1 by being immersed therein", "the method in which the coating raw material solution 1 is sprayed as a spray liquid to and brought into contact with the raw material compound", or "the method in which the coating raw material solution 1 is applied as a shower liquid to the raw material compound" is preferable. When the raw material compound is immersed in the solution, the spray liquid is brought into contact with the raw material compound, or the shower liquid is brought into contact with the raw material compound by being applied thereto, it is possible to uniformly attach the coating raw material to the particle surfaces of the raw material compound.

·· Step (b1-1)

A case where the step (b1) is the step (b1-1) of bringing the coating raw material solution 1 into contact with the raw material compound by being sprayed thereto to obtain a raw material mixture will be described.
In a case where the coating raw material solution 1 is sprayed as a spray liquid to and brought into contact with the raw material compound, it is preferable that the raw material compound is adjusted to a temperature of -20°C or higher and 300°C or lower and the coating raw material solution 1 is sprayed to and brought into contact with the raw material compound. In order to suppress Li being excessively extracted from the raw material compound by a reaction between the raw material compound and hot water, the upper limit value of the temperature of the raw material compound is preferably 270°C, more preferably 240°C, still more preferably 210°C, and particularly preferably 180°C. In addition, the lower limit value of the temperature of the raw material compound is preferably 0°C and more preferably 30°C in order to prevent the freezing of the coating raw material solution 1, and the lower limit value is still more preferably 70°C and particularly preferably 100°C in order to immediately evaporate the solution that has come into contact with the raw material compound to suppress Li being extracted from the raw material compound by the solution that has come into contact with the raw material compound.

The upper limit value and the lower limit value of the temperature of the raw material compound can be randomly combined together.

As examples of the combination, for example, the temperatures of the raw material compound of 0°C or higher and 270°C or lower, 30°C or higher and 240°C or lower, 70°C or higher and 210°C or lower, and 100°C or higher and 180°C or lower are exemplary examples.

In a case where the coating raw material solution 1 is sprayed as a spray liquid to and brought into contact with the raw material compound, the Sauter average particle diameter $D_{32}$ of sprayed liquid droplets is preferably 10 $\mu$m or more and 500 $\mu$m or less. In order to suppress the occurrence of uneven dispersion of the coating element M, the upper limit value of the Sauter average particle diameter $D_{32}$ of the sprayed liquid droplets is preferably 400 $\mu$m, more preferably 300 $\mu$m, still more preferably 250 $\mu$m, and particularly preferably 200 $\mu$m. In addition, in order to prevent the excessive degradation of the productivity, the lower limit value of the Sauter average particle diameter $D_{32}$ of the sprayed liquid droplets is preferably 15 $\mu$m, more preferably 20 $\mu$m, still more preferably 25 $\mu$m, and particularly preferably 30 $\mu$m.

The upper limit value and the lower limit value of the Sauter average particle diameter $D_{32}$ of the sprayed liquid droplets can be randomly combined together.

As examples of the combination, for example, the Sauter average particle diameters $D_{32}$ of the sprayed liquid droplets of 15 $\mu$m or more and 400 $\mu$m or less, 20 $\mu$m or more and 300 $\mu$m or less, 25 $\mu$m or more and 250 $\mu$m or less, and 30 $\mu$m or more and 200 $\mu$m or less are exemplary examples.

The Sauter average particle diameter $D_{32}$ of the sprayed liquid droplets is measured by an immersion method. As a specific method, mist is caught on a plate glass coated with silicone oil in a predetermined thickness, an enlarged photograph is rapidly captured, and the number of liquid droplets is counted from the obtained enlarged photograph by size. With an assumption that the number of liquid droplets having a diameter of di is $n_i$, the Sauter average particle diameter $D_{32}$ of the sprayed liquid droplets is represented by the following equation.

$$D_{32} = (\Sigma n_i d_i{}^3)/(\Sigma n_i d_i{}^2)$$

In a case where the coating raw material solution 1 is sprayed as a spray liquid to and brought into contact with the raw material compound, the ratio between the median diameter $DP_{50}$ of the raw material compound and the Sauter average particle diameter $D_{32}$ of the sprayed liquid droplets at the time of spraying the coating raw material solution, $DP_{50}/D_{32}$ is preferably 0.001 or more and 10 or less. In order to prevent the excessive degradation of the productivity, the upper limit value of $DP_{50}/D_{32}$ is preferably 5, more preferably 1, still more preferably 0.7, and particularly preferably 0.5. In addition, in order to suppress the occurrence of uneven dispersion of the element M, the lower limit value of $DP_{50}/D_{32}$ is preferably 0.003, more preferably 0.005, still more preferably 0.007, and particularly preferably 0.01.

The upper limit value and the lower limit value of $DP_{50}/D_{32}$ can be randomly combined together.

As examples of the combination, for example, $DP_{50}/D_{32}$ of 0.003 or more and 5 or less, 0.005 or more and 1 or less, 0.007 or more and 0.7 or less, and 0.01 or more and 0.5 or less are exemplary examples.

The median diameter $DP_{50}$ of the raw material compound is measured by a laser diffraction scattering method. As a specific measurement method, first, 0.1 g of a raw material compound powder is poured into 50 ml of a 0.2 mass% sodium hexametaphosphate aqueous solution to obtain a dispersion liquid in which the raw material compound powder is dispersed.

Next, the particle size distribution of the obtained dispersion liquid is measured using a laser diffraction scattering particle size distribution measuring device to obtain a volume-based cumulative particle size distribution curve.

As the laser diffraction scattering particle size distribution measuring device, for example, Microtrac MT3300EXII manufactured by MicrotracBEL Corp. can be used.

In addition, in the obtained cumulative particle size distribution curve, the value of the particle diameter at a point where the cumulative volume from the fine particle side reaches 50% when the entire horizontal axis is set to 100% is defined as $DP_{50}$ ($\mu$m) that is the median diameter.

In a case where the coating raw material solution 1 is sprayed as a spray liquid to and brought into contact with the raw material compound, the solution temperature of the coating raw material solution 1 at the time of bringing the coating raw material solution 1 into contact with the raw material compound is preferably -20°C or higher and 300°C or lower. In order to suppress Li being excessively extracted from the raw material compound by a reaction between the raw material compound and hot water, the upper limit value of the solution temperature is preferably 270°C, more preferably 240°C, still more preferably 210°C, and particularly preferably 180°C. In addition, the lower limit value of the solution temperature is preferably 0°C and more preferably 30°C in order to prevent the freezing of the coating raw material solution 1, and the lower limit value is still more preferably 70°C and particularly preferably 100°C in order to immediately evaporate the solution that has come into contact with the raw material compound to suppress Li being extracted from the raw material compound by the solution that has come into contact with the raw material compound.

The upper limit value and the lower limit value of the solution temperature can be randomly combined together.

As examples of the combination, for example, the solution temperatures of 0°C or higher and 270°C or lower, 30°C or higher and 240°C or lower, 70°C or higher and 210°C or lower, and 100°C or higher and 180°C or lower are exemplary examples.

In a case where the coating raw material solution 1 is sprayed as a spray liquid to and brought into contact with the raw material compound, the concentration of the element M in the coating raw material solution 1 is preferably 0.001 mol/L or more and 100 mol/L or less. In order to suppress the occurrence of uneven dispersion of the coating element M, the upper limit value of the concentration of the element M in the coating raw material solution 1 is preferably 80 mol/L, more preferably 70 mol/L, still more preferably 60 mol/L, and particularly preferably 50 mol/L. In addition, in order to prevent the excessive degradation of the productivity, the lower limit value of the concentration of the element M in the coating raw material solution 1 is preferably 0.003 mol/L, more preferably 0.005 mol/L, still more preferably 0.007 mol/L, and particularly preferably 0.01 mol/L.

The upper limit value and the lower limit value of the concentration of the element M in the coating raw material solution 1 can be randomly combined together.

As examples of the combination, the concentrations of the element M in the coating raw material solution 1 of 0.003 mol/L or more and 80 mol/L or less, 0.005 mol/L or more and 70 mol/L or less, 0.007 mol/L or more and 60 mol/L or less, and 0.01 mol/L or more and 50 mol/L or less are exemplary examples.

In a case where the coating raw material solution 1 is sprayed as a spray liquid to and brought into contact with the raw material compound, the mole ratio (M/Li) of the amount of the substance of the element M to the amount of a substance of lithium that is contained in the raw material mixture is preferably 0.1 or more and 50 or less. Here, the amount of the substance of lithium that is contained in the raw material mixture is an amount obtained by subtracting the amount of the substance of lithium that is contained in the crystal structure of the raw material compound from the amount of the substance of lithium that is contained in the raw material mixture and is the amount of the substance of Li excluding Li that is contained in the crystal structure. That is, the amount of the substance of lithium that is contained in the raw material mixture is the amount of a substance converted from the above-described amount of surplus lithium, and, in a case where the coating raw material solution 1 contains lithium, the amount of the substance of lithium that is contained in the raw material mixture is the total amount of the amount of the substance converted from the above-described amount of surplus lithium and the amount of the substance of lithium that is contained in the coating raw material solution 1. Here, the amount of the substance converted from the above-described amount of surplus lithium is the total value of the amount of the substance of lithium that is contained in the above-described amount of lithium carbonate and the amount of the substance of lithium that is contained in the above-described amount of lithium hydroxide.

In order to suppress the element M forming a resistance layer without generating a compound with Li, the upper limit value of M/Li is preferably 30, more preferably 20, still more preferably 10, and particularly preferably 5.

In addition, in order to prevent the resistance reduction effect of the coating element M from fading, the lower limit value of M/Li is preferably 0.2, more preferably 0.5, still more preferably 1.0, and particularly preferably 1.5.

The upper limit value and the lower limit value of M/Li can be randomly combined together.

As examples of the combination, for example, M/Li of 0.2 or more and 30 or less, 0.5 or more and 20 or less, 1.0 or more and 10 or less, and 1.5 or more and 5 or less are exemplary examples.

• Step (b2)

A case where the step (b) is the step (b2) of immersing the raw material compound in a coating raw material solution 2 containing the element M and lithium to obtain a raw material mixture will be described.

Lithium that is contained in the coating raw material solution 2 may be unreacted residual lithium that has been contained in the raw material compound and is eluted into the solution or a lithium compound separately added to the coating raw material solution.

In the case of immersing the raw material compound in the coating raw material solution 2, the amount of the coating raw material solution 2 with respect to the raw material compound is preferably 0.1 times or more and 10 times or less based on a weight. In order to suppress Li from being excessively extracted from the raw material compound, the upper limit value of the amount of the coating raw material solution 2 with respect to the raw material compound is preferably 8, more preferably 7, still more preferably 6, and particularly preferably 5. In addition, in order to maintain the fluidity of the slurry, the lower limit value of the amount of the coating raw material solution 2 with respect to the raw material compound is preferably 0.3, more preferably 0.5, still more preferably 0.7, and particularly preferably 1.

The upper limit value and the lower limit value of the amount of the coating raw material solution 2 with respect to the raw material compound can be randomly combined together.

As examples of the combination, for example, the amounts of the coating raw material solution 2 with respect to the raw material compound of 0.3 or more and 8 or less, 0.5 or more and 7 or less, 0.7 or more and 6 or less, and 1 or more and 5 or less are exemplary examples.

In the case of immersing the raw material compound in the coating raw material solution 2, the temperature of the coating raw material solution 2 is preferably adjusted to -20°C or higher and 80°C or lower. In order to suppress lithium ions being excessively eluted into the coating raw material solution from the crystal structure of the raw material compound, the upper limit value of the temperature of the coating raw material solution 2 is preferably 60°C, more preferably 50°C, still more preferably 40°C, and particularly preferably 30°C. In order to prevent the freezing of the coating raw material solution 2, the lower limit value of the temperature of the coating raw material solution 2 is preferably -15°C, more preferably -10°C, still more preferably -5°C, and particularly preferably 0°C.

The upper limit value and the lower limit value of the temperature of the coating raw material solution 2 can be randomly combined together.

As examples of the combination, for example, the temperatures of the coating raw material solution 2 of -15°C or higher and 60°C or lower, -10°C or higher and 50°C or lower, -5°C or higher and 40°C or lower, and 0°C or higher and 30°C or lower are exemplary examples.

In the case of immersing the raw material compound in the coating raw material solution 2, the concentration of Li that is contained in the coating raw material solution 2 is preferably 0.01 mol/L or more and 10 mol/L or less. In order to prevent an excess impurity Li from remaining in the raw material mixture, the upper limit value of the concentration of Li that is contained in the coating raw material solution 2 is preferably 5 mol/L, more preferably 2 mol/L, still more preferably 1 mol/L, and particularly preferably 0.5 mol/L.

In addition, in order to suppress the element M forming a resistance layer without generating a compound with Li, the lower limit value of the concentration of Li that is contained in the coating raw material solution 2 is preferably 0.015 mol/L, more preferably 0.018 mol/L, still more preferably 0.020 mol/L, and particularly preferably 0.22 mol/L.

The upper limit value and the lower limit value of the concentration of Li that is contained in the coating raw material solution 2 can be randomly combined together.

As examples of the combination, for example, the concentrations of Li that is contained in the coating raw material solution 2 of 0.015 mol/L or more and 5 mol/L or less, 0.018 mol/L or more and 2 mol/L or less, 0.020 mol/L or more and 1 mol/L or less, and 0.22 mol/L or more and 0.5 mol/L or less are exemplary examples.

In the case of immersing the raw material compound in the coating raw material solution 2, the ratio (M/Li) of the amount of the substance of the element M to the amount of the substance of lithium that is contained in the raw material mixture is preferably 0.1 or more and 50 or less. Here, the amount of the substance of lithium that is contained in the raw material mixture is an amount obtained by subtracting the amount of the substance of lithium that is contained in the crystal structure of the raw material compound from the amount of the substance of lithium that is contained in the raw material mixture and is the amount of the substance of Li excluding Li that is contained in the crystal structure. That is, the amount of the substance of lithium that is contained in the raw material mixture is the amount of a substance converted from the above-described amount of surplus lithium, and, in a case where the coating raw material solution 2 contains lithium, the amount of the substance of lithium that is contained in the raw material mixture is the total amount of the amount of the substance converted from the above-described amount of surplus lithium and the amount of the substance of lithium that is contained in the coating raw material solution 2. Here, the amount of the substance converted from the above-described amount of surplus lithium is the total value of the amount of the substance of lithium that is contained in the above-described amount of lithium carbonate and the amount of the substance of lithium that is contained in the above-described amount of lithium hydroxide.

In order to suppress the element M forming a resistance layer without generating a compound with Li, the upper limit value of M/Li is preferably 30, more preferably 20, still more preferably 10, and particularly preferably 5. In addition, in order to prevent the resistance reduction effect of the coating element M from fading, the lower limit value of M/Li is preferably 0.2, more preferably 0.5, still more preferably 1.0, and particularly preferably 1.5.

The upper limit value and the lower limit value of M/Li can be randomly combined together.

As examples of the combination, for example, M/Li of 0.2 or more and 30 or less, 0.5 or more and 20 or less, 1.0 or more and 10 or less, and 1.5 or more and 5 or less are exemplary examples.

• Step (b3)

A case where the step (b) is the step (b3) of bringing a powder-form coating raw material containing the element M into contact with a powder-form raw material compound to obtain a raw material mixture will be described.

When the coating raw material and the raw material compound are brought into contact with each other, in the case of using a coating compound in a powder state as the coating raw material, the coating raw material and the raw material compound are mixed and brought into contact with each other in a powder state to obtain a raw material mixture.

The mole ratio (M/Li) of the amount of the substance of the element M to the amount of the substance of lithium that is contained in the raw material mixture is preferably 0.1 or more and 50 or less. Here, the amount of the substance of lithium that is contained in the raw material mixture is an amount obtained by subtracting the amount of the substance of lithium that is contained in the crystal structure of the raw material compound from the amount of the substance of lithium that is contained in the raw material mixture and is the amount of the substance of Li excluding Li that is contained in the crystal structure. That is, the amount of the substance of lithium that is contained in the raw material mixture is the amount of a substance converted from the above-described amount of surplus lithium, and, in a case where the coating raw material contains lithium, the amount of the substance of lithium that is contained in the raw material mixture is the total amount of the amount of the substance converted from the above-described amount of surplus lithium and the amount of the substance of lithium that is contained in the coating raw material. Here, the amount of the substance converted from the above-described amount of surplus lithium is the total value of the amount of the substance of lithium that is contained in the above-described amount of lithium carbonate and the amount of the substance of lithium that is contained in the above-described amount of lithium hydroxide. In order to suppress the element M forming a resistance layer without generating a compound with Li, the upper limit value of M/Li is preferably 30, more preferably 20, still more preferably 10, and particularly preferably 5. In addition, in order to prevent the resistance reduction effect of the element M from fading, the lower limit value of M/Li is preferably 0.2, more preferably 0.5, still more preferably 1.0, and particularly preferably 1.5.

The upper limit value and the lower limit value of M/Li can be randomly combined together.

As examples of the combination, for example, M/Li of 0.2 or more and 30 or less, 0.5 or more and 20 or less, 1.0 or more and 10 or less, and 1.5 or more and 5 or less are exemplary examples.

The ratio (M/(Ni + X)) of the element M that is contained in the coating raw material to the total amount of metal elements, excluding Li, that are contained in the raw material compound in the step (b), that is, the total amount of the substances of Ni and the element X (Ni + X) is preferably 0.001 or more and 0.05 or less in terms of the mole ratio. In order to prevent the weight ratio of the core particle portions of the lithium metal composite oxide powder that carries out a charging and discharging reaction from excessively decreasing due to an excessively coating layer, the upper limit value of M/(Ni + X) is preferably 0.04, more preferably 0.03, still more preferably 0.025, and particularly preferably 0.02. In addition, in order to prevent the resistance reduction effect of the element M from fading, the lower limit value of M/(Ni + X) is preferably 0.002, more preferably 0.003, still more preferably 0.0035, and particularly preferably 0.004.

The upper limit value and the lower limit value of M/(Ni + X) can be randomly combined together.

As examples of the combination, for example, M/(Ni + X) of 0.002 or more and 0.04 or less, 0.003 or more and 0.03 or less, 0.0035 or more and 0.025 or less, and 0.004 or more and 0.02 or less are exemplary examples.

When the ratio of the element M in the coating raw material is set in the above-described range, it becomes easy to control R(90) in the range of the present embodiment.

[Step (c)]

The step (c) is a step of thermally treating the raw material mixture obtained in the step (b) at a temperature of 200°C or higher and 600°C or lower.

• Thermal treatment step

From the viewpoint of uniformly dispersing the coating material on the surface of the lithium metal composite oxide powder, the heating temperature in the thermal treatment step is more preferably 250°C or higher and particularly preferably 300°C or higher.

In addition, from the viewpoint of suppressing the thermal decomposition of the coating material and the formation of a solid solution in the raw material compound by the coating raw material, the heating temperature in the thermal treatment step is more preferably 550°C or lower and particularly preferably 500°C or lower.

When the raw material mixture is heated in the above-described temperature range, it becomes easy to control R(90) in the range of the present embodiment.

After the heating, the lithium metal composite oxide powder of the present embodiment is obtained.

[Random step]

In the present embodiment, the lithium metal composite oxide powder after the heating step is preferably washed with pure water, an alkaline washing liquid, or the like as a washing liquid.

As the alkaline washing liquid, for example, aqueous solutions of one or more anhydrides selected from the group consisting of LiOH (lithium hydroxide), NaOH (sodium hydroxide), KOH (potassium hydroxide), $Li_2CO_3$ (lithium carbonate), Na$_2$CO3 (sodium carbonate), $K_2CO_3$ (potassium carbonate), and $(NH_4)_2CO_3$ (ammonium carbonate) and aqueous solutions of a hydrate of the above-described anhydride are exemplary examples. In addition, as an alkali, it is also possible to use ammonia.

In the washing step, as a method for bringing the washing liquid and the lithium metal composite oxide powder into contact with each other, a method in which the lithium metal composite oxide powder is poured into each washing liquid and stirred, a method in which each washing liquid is applied as shower water to the lithium metal composite oxide powder, and a method in which the lithium metal composite oxide powder is poured into the washing liquid and stirred, then, the lithium metal composite oxide powder is separated from each washing liquid, and then each washing liquid is applied as shower water to the separated lithium metal composite oxide powder are exemplary examples.

The temperature of the washing liquid that is used for the washing is preferably 15°C or lower, more preferably 10°C or lower, and still more preferably 8°C or lower. When the temperature of the washing liquid is controlled in the above-described range to a temperature at which the washing liquid does not freeze, it is possible to suppress the excessive elution of lithium ions from the crystal structure of the lithium metal composite oxide powder into the washing liquid during the washing.

The lithium metal composite oxide powder obtained by calcining is pulverized after a random washing step, appropriately classified, and made into a positive electrode active material for a lithium secondary battery applicable to lithium secondary batteries. The 10% cumulative diameter $D_{10}$, the 50% cumulative diameter $D_{50}$, and the 90% cumulative diameter $D_{90}$ of a lithium metal composite oxide powder to be obtained can be controlled in the range of the present embodiment by adjusting, particularly, pulverization conditions.

The positive electrode active material for a lithium secondary battery of the present embodiment may contain a lithium metal composite oxide powder that is different from the lithium metal composite oxide powder of the present embodiment.

<Lithium secondary battery>

Next, the configuration of a lithium secondary battery that is suitable as an application of the positive electrode active material of the present embodiment will be described.

Furthermore, a positive electrode that is suitable as an application of a positive electrode active material for a lithium secondary battery containing the positive electrode active material powder of the present embodiment will be described.

Furthermore, a lithium secondary battery that is suitable as an application of the positive electrode will be described.

An example of the lithium secondary battery that is suitable as an application of the positive electrode active material of the present embodiment has a positive electrode, a negative electrode, a separator interposed between the positive electrode and the negative electrode, and an electrolytic solution disposed between the positive electrode and the negative electrode.

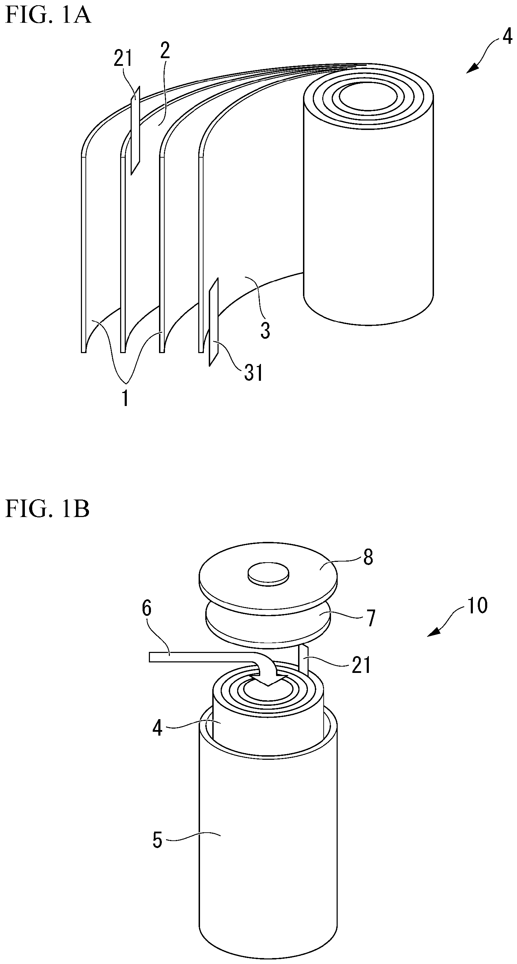

Fig. 1A and Fig. 1B are schematic views showing an example of a lithium secondary battery. A cylindrical lithium secondary battery 10 is produced as described below.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in Fig. 1B, the electrode group 4 and an insulator, not shown, are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as a shape of the lithium secondary battery having the electrode group 4, a shape specified by IEC60086, which is a standard for a battery specified by the International Electrotechnical Commission (IEC), or by JIS C 8500 can be adopted. For example, shapes such as a cylindrical type and a square type can be exemplary examples.

Furthermore, the lithium secondary battery is not limited to the winding-type configuration and may be a laminate-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

The positive electrode can be produced by, first, adjusting a positive electrode mixture containing a positive electrode active material, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture enhances the conductivity inside the positive electrode and is thus capable of improving the charge and discharge efficiency and output characteristics. However, when the carbon black is added too much, both the binding force between the positive electrode mixture and the positive electrode current collector and the binding force inside the positive electrode mixture by the binder decrease, which conversely causes an increase in internal resistance.

The proportion of the conductive material in the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the proportion thereof.

(Binder)

As the binder in the positive electrode, a thermoplastic resin can be used. As this thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the proportion of the fluororesin in the entire positive electrode mixture is set to 1 mass% or more and 10 mass% or less, and the proportion of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as Al, Ni, or stainless steel as a forming material can be used. Among these, from the viewpoint of easy processing and low costs, a positive electrode current collector that contains Al as the forming material and is processed into a thin film shape is preferable.

As a method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As a method for applying the paste of the positive electrode mixture to the positive electrode current collector, for example, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite and artificial graphite, cokes, carbon black, pyrolytic carbons, a carbon fiber, and a calcined body of an organic polymer compound can be exemplary examples.

As the oxide that can be used as the negative electrode active material, oxides of silicon represented by a formula $SiO_x$ (here, x is a positive real number) such as $SiO_2$ and SiO; oxides of titanium represented by a formula $TiO_x$ (here, x is a positive real number) such as $TiO_2$ and TiO; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and composite metal oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such $V_3S_4$, $VS_2$, and VS; sulfides of iron represented by a formula $FeS_x$ (here, x is a positive real number) such as $Fe_3S_4$, $FeS_2$, and FeS; sulfides of molybdenum represented by a formula $MoS_x$ (here, x is a positive real number) such as $Mo_2S_3$ and $MOS_2$; sulfides of tin represented by a formula $SnS_x$ (here, x is a positive real number) such as $SnS_2$ and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as $Se_5S_3$, $SeS_2$, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose, polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu as a forming material and processed into a thin film shape is preferable since the negative electrode current collector does not easily produce an alloy with lithium and is easy to process.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials.

In the present embodiment, the air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolytic solution)

The electrolytic solution in the lithium secondary battery contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_zCF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more thereof may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. The electrolytic solution for which such a mixed solvent is used has a number of features as follows: the electrolytic solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing an ether having a fluorine substituent such as pentafluoropropyl methyl ether or 2,2,3,3-tetrafluoropropyl difluoromethyl ether and dimethyl carbonate is still more preferable since the capacity retention rate is high even when the lithium secondary battery is charged and discharged at a high current rate.

A solid electrolyte, which will be described below, may be used instead of the above-described electrolytic solution. There are cases where the use of the solid electrolyte is capable of further enhancing the safety of the lithium secondary battery.

In addition, in a case where the solid electrolyte is used in the lithium secondary battery, there are also cases where the solid electrolyte plays a role of the separator, and in such cases, the separator is not required in some cases.

<All-solid-state lithium secondary battery>

Next, a positive electrode for which a positive electrode active material for a lithium metal composite oxide powder according to an aspect of the present invention is used as a positive electrode active material for an all-solid-state lithium secondary battery and an all-solid-state lithium secondary battery having this positive electrode will be described while describing the configuration of the all-solid-state lithium secondary battery.

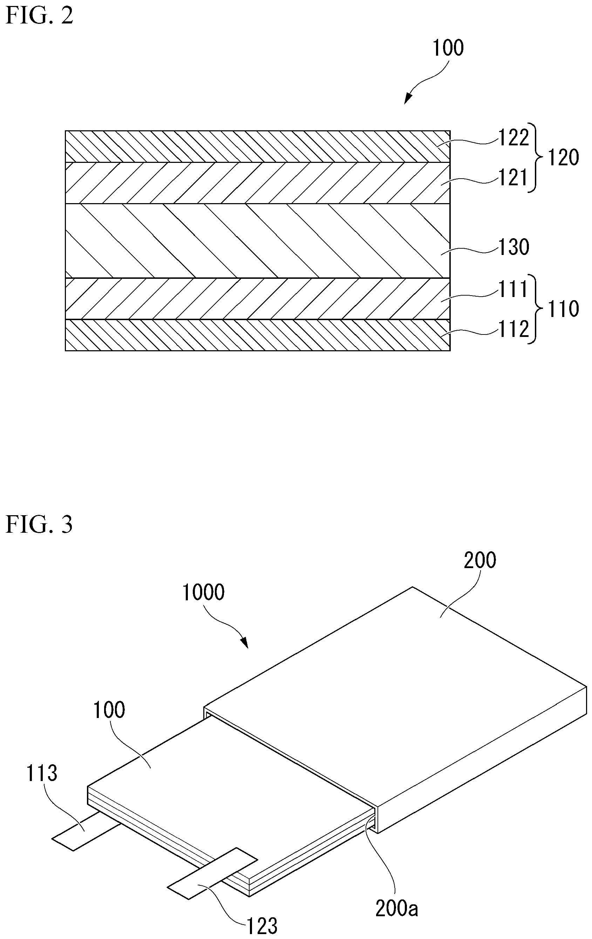

Fig. 2 and Fig. 3 are schematic views showing an example of an all-solid-state lithium secondary battery of the present embodiment. An all-solid-state secondary battery 1000 shown in Fig. 2 and Fig. 3 has a laminate 100 having a positive electrode 110, a negative electrode 120, and a solid electrolyte layer 130 and an exterior body 200 accommodating the laminate 100. A material that configures each member will be described below.

The laminate 100 may have an external terminal 113 that is connected to a positive electrode current collector 112 and an external terminal 123 that is connected to a negative electrode current collector 122. In addition, the all-solid-state secondary battery 1000 may have a separator between the positive electrode 110 and the negative electrode 120.

The all-solid-state secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin type, a button type, a paper type (or a sheet type), a cylindrical type, a square type, and a laminate type (pouch type) can be exemplary examples.

As an example of the all-solid-state secondary battery 1000, a form in which one laminate 100 is provided is shown in the drawings, but the present embodiment is not limited thereto. The all-solid-state secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains the positive electrode active material, which is one aspect of the present invention described above, and a solid electrolyte. In addition, the positive electrode active material layer 111 may contain a conductive material and a binder.

(Solid electrolyte)

As the solid electrolyte that is contained in the positive electrode active material layer 111 of the present embodiment, a solid electrolyte that is lithium ion-conductive and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples.

(Oxide-based solid electrolyte)

As the oxide-based solid electrolyte, for example, a perovskite-type oxides, a NASICON-type oxide, a LISICON-type oxide, a garnet-type oxides, and the like are exemplary examples.

As the perovskite-type oxide, Li-La-Ti-based oxides such as $Li_aLa_{1-a}TiO_3$ ($0 < a < 1$), Li-La-Ta-based oxides such as $Li_bLa_{1-b}TiO_3$ ($0 < b < 1$), Li-La-Nb-based oxides such as $Li_cLa_{1-c}NbO_3$ ($0 < c < 1$), and the like are exemplary examples.

As the NASICON-type oxide, $Li_{1+d}Al_dTi_{2-d}(PO_4)_3$ ($0 \leq d \leq 1$) and the like are exemplary examples. The NASICON-type oxide is an oxide represented by $Li_eM^1_fM^2_gP_hO_i$ (in the formula, $M^1$ is one or more elements selected from the group consisting of B, Al, Ga, In, C, Si, Ge, Sn, Sb, and Se. $M^2$ is one or more elements selected from the group consisting of Ti, Zr, Ge, In, Ga, Sn, and Al. e, f, g, h, and i are random positive numbers).

As the LISICON-type oxide, oxides represented by $Li_4M^3O_4$-$Li_3M^4O_4$ ($M^3$ is one or more elements selected from the group consisting of Si, Ge, and Ti. $M^4$ is one or more elements selected from the group consisting of P, As, and V) and the like are exemplary examples.

As the garnet-type oxide, Li-La-Zr-based oxides such as $Li_7La_3Zr_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$, $LiI$-$Li_2S$-$P_2O_5$, $LiI$-$Li_3PO_4$-$P_2S_5$, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes mainly containing $Li_2S$ and $P_2S_5$ and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers. Z is Ge, Zn, or Ga.), and the like are exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers. M is P, Si, Ge, B, Al, Ga, or In.), and the like are exemplary examples.

As the $Li_2S$-$GeS_2$-based compounds, include $Li_2S$-$GeS_2$, $Li_2S$-$GeS_2$-$P_2S_5$, and the like are exemplary examples.

The sulfide-based solid electrolyte may be a crystalline material or an amorphous material.

(Hydride-based solid electrolyte)

As the hydride-based solid electrolyte material, $LiBH_4$, $LiBH_4$-$3KI$, $LiBH_4$-$PI_2$, $LiBH_4$-$P_2S_5$, $LiBH_4$-$LiNH_2$, $3LiBH_4$-$LiI$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like can be exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in the polymer compound.

Two or more solid electrolytes can be jointly used as long as the effect of the invention is not impaired.

(Conductive material)

As the conductive material in the positive electrode active material layer 111 of the present embodiment, at least one of a carbon material and a metal compound can be used. As the carbon material, graphite powder, carbon black (for example, acetylene black), a fibrous carbon material, and the like can be exemplary examples. Since carbon black is fine particles and has a large surface area, the addition of carbon black in an appropriate amount, which will be described below, to the positive electrode active material layer 111 makes it possible to enhance the conductivity inside the positive electrode 110 and to improve the charge and discharge efficiency and output characteristics. On the other hand, when the amount of carbon black added is too large, both the binding force between the positive electrode active material layer 111 and the positive electrode current collector 112 and the binding force inside the positive electrode active material layer 111 decrease, which conversely causes an increase in internal resistance. In addition, as the metal compound, metals, metal alloys, and metal oxides, all of which are electrically conductive, are exemplary examples.

In the case of the carbon material, the proportion of the conductive material in the positive electrode active material layer 111 is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the proportion thereof.

(Binder)

In a case where the positive electrode active material layer 111 has a binder, a thermoplastic resin can be used as the binder. As this thermoplastic resin, polyimidebased resins; fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the proportion of the fluororesin in the entire positive electrode active material layer 111 is set to 1 mass% or more and 10 mass% or less, and the proportion of the polyolefin resin is set to 0.1 mass% or more and 2 mass% or less, the positive electrode active material layer 111 has both a high adhesive force between the positive electrode active material layer 111 and the positive electrode current collector 112 and a high bonding force inside the positive electrode active material layer 111.

(Positive electrode current collector)

As the positive electrode current collector 112 in the positive electrode 110 of the present embodiment, a strip-shaped member formed of a metal material such as Al, Ni, or stainless steel as a forming material can be used. Among these, from the viewpoint of easy processing and low costs, a member that contains Al as the forming material and is processed into a thin film shape is preferable.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used to form the positive electrode active material layer 111 by pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface of the positive electrode current collector 112, and calcining the positive electrode mixture.

As the organic solvent that can be used in the positive electrode mixture, amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone (hereinafter, referred to as NMP in some cases) are exemplary examples.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the solid electrolyte, the conductive material, and a binder, those described above can be used.

(Negative electrode active material)

As the negative electrode active material in the negative electrode active material layer 121, materials which are a carbon material, a chalcogen compound (oxide, sulfide, or the like), a nitride, a metal, or an alloy and which can be doped with lithium ions and from which lithium ions can be de-doped at a potential lower than that of the positive electrode 110 are exemplary examples.

As the carbon material that can be used as the negative electrode active material, graphite such as natural graphite and artificial graphite, cokes, carbon black, pyrolytic carbons, a carbon fiber, and a calcined body of an organic polymer compound can be exemplary examples.

As the oxide that can be used as the negative electrode active material, oxides of silicon represented by a formula $SiO_x$ (here, x is a positive real number) such as $SiO_2$ and $SiO$; oxides of titanium represented by a formula $TiO_x$ (here, x is a positive real number) such as $TiO_2$ and $TiO$; oxides of vanadium represented by a formula $VO_x$ (here, x is a positive real number) such as $V_2O_5$ and $VO_2$; oxides of iron represented by a formula $FeO_x$ (here, x is a positive real number) such as $Fe_3O_4$, $Fe_2O_3$, and $FeO$; oxides of tin represented by a formula $SnO_x$ (here, x is a positive real number) such as $SnO_2$ and $SnO$; oxides of tungsten represented by a general formula $WO_x$ (here, x is a positive real number) such as $WO_3$ and $WO_2$; and metal composite oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and $TiS$; sulfides of vanadium represented by a formula $VS_x$ (here, x is a positive real number) such $V_3S_4$, $VS_2$, and $VS$; sulfides of iron represented by a formula $FeS_x$ (here, x is a positive real number) such as $Fe_3S_4$, $FeS_2$, and $FeS$; sulfides of molybdenum represented by a formula $MoS_x$ (here, x is a positive real number) such as $Mo_2S_3$ and $MoS_2$; sulfides of tin represented by a formula $SnS_x$ (here, x is a positive real number) such as $SnS_2$ and $SnS$; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as $Se_5S_3$, $SeS_2$, and $SeS$ can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can also be exemplary examples.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode 120 rarely changes (that is, the potential flatness is favorable) from a uncharged state to a fully-charged state during charging, the average discharging potential is low, the capacity retention rate at the time of repeatedly charging and discharging the lithium secondary battery is high (that is, the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

In addition, among the above-described negative electrode active materials, the oxides are preferably used since the thermal stability is high and dendrites (also referred to as dendritic crystals) are not easily generated by Li metal. As the shape of the oxide, a fibrous or fine powder aggregate is preferably used.

(Negative electrode current collector)

As the negative electrode current collector 122 in the negative electrode 120, a strip-shaped member formed of a metal material such as Cu, Ni, or stainless steel as the forming material can be an exemplary example. Particularly, a member that is formed of Cu as a forming material and processed into a thin film shape is preferable since the negative electrode current collector does not easily produce an alloy with lithium and is easy to process.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then calcined on the negative electrode current collector 122 are exemplary examples.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method such that the negative electrode active material layer 121 comes into contact with the surface of the solid electrolyte layer 130.

Another aspect of the present invention includes the following inventions.

[30] A lithium metal composite oxide powder having a layered structure and containing at least Li, Ni, and an element X, the element X being one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P, in which, in a cumulative frequency distribution curve of R that is defined below, which ranges 0% to 100% as a whole, a value R(90) of R at a point where a cumulative frequency from a small side of the R reaches 90% is 1.7 or more and 3.7 or less, and, in the cumulative frequency distribution curve of the R ranging 0% to 100% as a whole, a value R(50) of R at a point where the cumulative frequency from the small side of the R reaches 50% is 1.7 or more and 2.7 or less.

R is a ratio (O/(Ni + X)) of an amount (O) of a substance of oxygen to a total amount (Ni + X) of substances of nickel and the element X in one particle of a lithium metal composite oxide that is contained in the lithium metal composite oxide powder.

The amounts of the substances of nickel, the element X, and oxygen are obtained by energy-dispersive X-ray (EDX) spectroscopy in which an accelerating voltage is set to 1100 V regarding the one particle of the lithium metal composite oxide.

[31] The lithium metal composite oxide powder according to [30], in which, in the cumulative frequency distribution curve of R ranging 0% to 100% as a whole, a value R(10) of R at a point where the cumulative frequency from the small side of the R reaches 10% is 1.1 or more and 3.3 or less.

[32] The lithium metal composite oxide powder according to [30] or [31], in which the following formula (I) is satisfied.

$$Li[Li_m(Ni_{(1-n)}X_n)_{1-m}]O_2 \ldots \quad (I)$$

$(-0.1 \leq m \leq 0.2$ and $0 < n \leq 0.7$.)

[33] The lithium metal composite oxide powder according to [32], in which m in the formula (I) is $0 < m \leq 0.2$.

[34] The lithium metal composite oxide powder according to any one of [30] to [33], containing a core particle and a coating material.

[35] The lithium metal composite oxide powder according to [34], in which the coating material contains a lithium-containing composite compound of Li and an element M. Here, the element M is one or more selected from Al, Zr, B, Si, S, Nb, F, and P.

[36] The lithium metal composite oxide powder according to any one of [30] to [35], further containing a single particle.

[37] The lithium metal composite oxide powder according to any one of [30] to [36], in which, in a 10% cumulative diameter ($D_{10}$), a 50% cumulative diameter ($D_{50}$), and a 90% cumulative diameter ($D_{90}$), all of which are obtained from particle size distribution measurement values, the 50% cumulative diameter ($D_{50}$) is 0.5 $\mu$m or more and 10 $\mu$m or less, and furthermore, a relationship of the following formula (A) is satisfied.

$$0.3 \leq (D_{90} - D_{10}) / D_{50} \leq 3 \ldots (A)$$

[38] The lithium metal composite oxide powder according to any one of [30] to [37], in which, when a positive electrode for a lithium secondary battery in which a mass ratio of the lithium metal composite oxide powder, acetylene black, and PVdF is 92:5:3 (lithium metal composite oxide powder:acetylene black:PVdF) and an electrode area is 1.65 cm$^2$ is formed, a coin-type battery R2032 including the positive electrode for a lithium secondary battery, a separator of a polyethylene porous film, an electrolytic solution obtained by dissolving LiPF$_6$ in a liquid mixture of ethylene carbonate, dimethyl carbonate, and ethyl methyl carbonate in a volume ratio of 30:35:35 to reach 1.0 mol/L, and a negative electrode for a secondary battery made of lithium metal is produced, and a self-discharge rate is measured as described below in a test of the coin-type battery R2032 under conditions described below, the self-discharge rate is 14% or less.

• Testing conditions

The coin-type battery is charged at a testing temperature of 25°C with a maximum charging voltage of 4.4 V and a charging current of 0.5 CA in a constant current constant voltage mode until the current value reaches 0.05 CA. After that, the coin-type battery is constant-current-discharged up to 2.5 V with a discharge current value of 0.5 CA, and a discharge capacity before storage is measured.

Next, the coin-type battery is charged at a testing temperature of 25°C with a maximum charging voltage of 4.4 V and a charging current of 0.5 CA in the constant current constant voltage mode until the current value reaches 0.05 CA, and then the coin-type battery in a charged state is stored at a testing temperature of 60°C for seven days. After the storage, the coin-type battery is constant-current-discharged at 25°C up to 2.5 V at a discharge current value of 0.5 CA, and the storage capacity is measured. The self-discharge rate is calculated from the following formula.

$$\text{Self-discharge rate (\%)} = (\text{storage capacity} / \text{discharge capacity before storage}) \times 100$$

[39] A positive electrode active material for a lithium secondary battery, containing the lithium metal composite oxide powder according to any one of [30] to [38].

[40] A method for producing a lithium metal composite oxide powder, including the following steps (a) to (c) in the following order.

The step (a) is a step of mixing a precursor containing at least Ni and a lithium compound containing Li and calcining a mixture to obtain a raw material compound.

Step (b) A step of bringing a coating raw material containing at least one element M selected from the group consisting of Al, B, Si, S, Nb, F, and P and the raw material compound into contact with each other to obtain a raw material mixture.

The step (c) is a step of thermally treating the raw material mixture at a temperature of 200°C or higher and 600°C or lower.

Here, the step (b) is a step (b1) of bringing a coating raw material solution 1 containing the element M and the raw material compound into contact with each other to obtain the raw material mixture, and, after the step (b1) and before the step (c), a step (b1-A) of removing a solvent that is contained in the raw material mixture and adjusting a content rate of the solvent in the raw material mixture to 30 mass% or less is provided.

[41] The method for producing a lithium metal composite oxide powder according to [40], in which the step (b1) is a step (b1-1) of bringing the coating raw material solution 1 into contact with the raw material compound by spraying to obtain the raw material mixture.

[42] The method for producing a lithium metal composite oxide powder according to [40] or [41], in which, in the step (b1), the raw material compound is adjusted to a temperature of -20°C or higher and 300°C or lower and brought into contact with the coating raw material solution 1.

[43] The method for producing a lithium metal composite oxide powder according to [41] or [42], in which, in the step (b1-1), a Sauter average particle diameter $D_{32}$ of sprayed liquid droplets of the coating raw material solution 1 is 10 $\mu$m or more and 500 $\mu$m or less.

[44] The method for producing a lithium metal composite oxide powder according to any one of [41] to [43], in which, in the step (b1-1), a ratio ($DP_{50}/D_{32}$) of a median diameter $DP_{50}$ of the raw material compound to the Sauter average particle diameter $D_{32}$ of the sprayed liquid droplets at the time of spraying the coating raw material solution 1 is 0.001 or more and 10 or less.

[45] The method for producing a lithium metal composite oxide powder according to any one of [40] to [44], in which, in the step (b1), a temperature of the coating raw material solution 1 at the time of bringing the coating raw material solution 1 into contact with the raw material compound is -20°C or higher and 300°C or lower.

[46] The method for producing a lithium metal composite oxide powder according to any one of [40] to [45], in which, in the step (b1), a concentration of the element M in the coating raw material solution 1 is 0.001 mol/L or more and 100 mol/L or less.

[47] The method for producing a lithium metal composite oxide powder according to any one of [40] to [46], in which, in the step (b1), a ratio (M/Li) of an amount of a substance of the element M to an amount of a substance of lithium that is contained in the raw material mixture is 0.1 or more and 50 or less.

Here, the amount of the substance of lithium that is contained in the raw material mixture is defined as an amount obtained by subtracting an amount of the substance of lithium that is contained in a crystal structure of the raw material compound from the amount of the substance of lithium that is contained in the raw material mixture.

[48] A method for producing a lithium metal composite oxide powder, including the following steps (a) to (c) in the following order.

The step (a) is a step of mixing a precursor containing at least Ni and a lithium compound containing Li and calcining a mixture to obtain a raw material compound.

Step (b) A step of bringing a coating raw material containing at least one element M selected from the group consisting of Al, B, Si, S, Nb, F, and P and the raw material compound into contact with each other to obtain a raw material mixture.

The step (c) is a step of thermally treating the raw material mixture at a temperature of 200°C or higher and 600°C or lower.

Here, the step (b) is a step (b2) of immersing the raw material compound in a coating raw material solution 2 containing the element M and lithium to obtain the raw material mixture, and

after the step (b2) and before the step (c), a step (b2-A) of removing a solvent that is contained in the raw material mixture and adjusting a content rate of the solvent in the raw material mixture to 30 mass% or less is provided.

[49] The method for producing a lithium metal composite oxide powder according to [48], in which, in the step (b2), an amount of the coating raw material solution 2 with respect to the raw material compound is 0.1 times or more and 10 times or less based on a weight.

[50] The method for producing a lithium metal composite oxide powder according to [48] or [49], in which a temperature of the coating raw material solution 2 is -20°C or higher and 80°C or lower.

[51] The method for producing a lithium metal composite oxide powder according to any one of [48] to [50], in which, in the step (b2), a concentration of Li that is contained in the coating raw material solution 2 is 0.01 mol/L or more and 10 mol/L or less.

[52] The method for producing a lithium metal composite oxide powder according to any one of [48] to [51], in which, in the step (b2), a ratio (M/Li) of an amount of a substance of the element M to an amount of a substance of lithium that is contained in the raw material mixture is 0.1 or more and 50 or less.

Here, the amount of the substance of lithium that is contained in the raw material mixture is defined as an amount obtained by subtracting an amount of the substance of lithium that is contained in a crystal structure of the raw material compound from the amount of the substance of lithium that is contained in the raw material mixture.

[53] The method for producing a lithium metal composite oxide powder according to [48] or [52], in which, in the step (b), a ratio (M/Li) of an amount of a substance of the element M to an amount of a substance of lithium that is contained in the raw material mixture is 0.1 or more and 50 or less.

here, the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

[54] The method for producing a lithium metal composite oxide powder according to any one of [48] to [53], in which the raw material compound contains the element X, in the step (b), a value of M/(Ni + X) that is a ratio of the element M that is contained in the coating raw material to Ni + X that is a total amount of substances of Ni and the element X that are contained in the raw material compound is 0.0001 or more and 0.05 or less in terms of a mole ratio.

Here, the element X is one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P.

[55] The method for producing a lithium metal composite oxide powder according to any one of [48] to [54], in which the raw material compound satisfies the following formula (II).

$$Li(Li_p(Ni_{(1-q-r)}Co_qX1_r)_{1-p})O_2 \text{ ...} \qquad (II)$$

($-0.1 \leq p \leq 0.2$, $0 \leq q \leq 0.4$, $0 \leq r \leq 0.4$, and $1-q-r \geq 0.3$ are satisfied, and X1 is one or more elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V.)

Furthermore, as the aspect of the present invention, the following aspects are exemplary examples.

[56] A positive electrode for a lithium secondary battery containing the positive electrode active material for a lithium secondary battery according to [39].

[57] A lithium secondary battery having the positive electrode for a lithium secondary battery according to [56].

[Examples]

Next, the present invention will be described in more detail using examples.

<Scanning electron microscope-energy-dispersive X-ray (EDX) spectroscopic measurement>

The cumulative frequency distribution curve of R on the surface of a lithium metal composite oxide powder was obtained using a scanning electron microscope-energy-dispersive X-ray (EDX) spectroscopy (JSM-7900F) manufactured by JEOL Ltd.

Here, R is the ratio (O/(Ni + X)) of the amount of a substance of oxygen (O) to the total amount of substances of Ni and an element X (Ni + X).

«Method for obtaining cumulative frequency distribution curve of R»

An EDX surface analysis for the primary particles of the lithium metal composite oxide powder particle was carried out on 50 particles, and R on each particle surface was calculated from the obtained EDX spectrum. The accelerating voltage at this time was set to 1100V. Furthermore, a cumulative frequency distribution curve was created from the calculated R of the 50 particles, the value of R at a point where the cumulative frequency from the small R side reached 90% was defined as R(90), the value of R at a point where the cumulative frequency from the small R side reached 10% was defined as R(10), and the value of R at a point where the cumulative frequency from the small R side reached 50% was defined as R(50).

Specifically, an SEM image of the lithium metal composite oxide powder was acquired from a visual field magnified 5000 times. Ten particles were randomly selected from particles that were included in such a visual field. This operation was carried out in five visual fields, and analyses were carried out on 50 particles.

<Measurement of cumulative particle size>

0.1 g of the lithium metal composite oxide powder was poured into 50 ml of a 0.2 mass% sodium hexametaphosphate aqueous solution to obtain a dispersion liquid in which the lithium metal composite oxide powder was dispersed. Next, the particle size distribution of the obtained dispersion liquid was measured using Microtrac MT3300EXII manufactured by MicrotracBEL Corp. (laser diffraction scattering particle size distribution measuring device) to obtain a volume-based cumulative particle size distribution curve. In addition, in the obtained cumulative particle size distribution curve ranging from 0% to 100% as a whole, the value of the particle diameter at a point where the cumulative volume from the fine particle side reached 90% was obtained as a 90% cumulative volume particle size ($D_{90}$) ($\mu$m), the value of the particle diameter at a point where the cumulative volume reached 50% was obtained as a 50% cumulative volume particle size ($D_{50}$) ($\mu$m), and the value of the particle diameter at a point where the cumulative volume reached 10% was obtained as a 10% cumulative volume particle size ($D_{10}$) ($\mu$m).

<Composition analysis>

The composition analysis of the lithium metal composite oxide powder that was produced by a method, which will be described below, or a raw material compound was carried out using an inductively coupled plasma emission spectrometer (SPS3000, manufactured by Seiko Instruments Inc.) after the obtained lithium metal composite oxide powder or raw material compound was dissolved in hydrochloric acid.

<Measurement of median diameter $DP_{50}$ of raw material compound>

Regarding the median diameter $DP_{50}$ of the raw material compound, the particle size distribution of the raw material compound was measured by the same operation as in the above-described <measurement of cumulative particle size>, and the value of the particle diameter at a point where the cumulative volume from the fine particle side reached 50% in the obtained cumulative particle size distribution curve ranging from 0% to 100% as a whole was obtained as $DP_{50}$ ($\mu$m).

<Measurement of amount of substance of Li excluding Li contained in crystal structure of raw material compound>

20 g of the raw material compound and 100 g of pure water were fed into a 100 ml beaker and stirred for five minutes. After stirring, the raw material compound was filtered, 0.1 mol/L hydrochloric acid was added dropwise to 60 g of the remaining filtrate, and the pH of the filtrate was measured with a pH meter. The amount of hydrochloric acid added for titration at pH = 8.3 $\pm$ 0.1 was indicated by A ml, the amount of hydrochloric acid added for titration at pH = 4.5 $\pm$ 0.1 was indicated by B ml, and the amount of lithium carbonate and the amount of lithium hydroxide that remained in the raw material compound were calculated from the following calculation equation. In the following equation, the molecular weights of lithium carbonate and lithium hydroxide were calculated with an assumption that the atomic weights of H, Li, C, and O were each 1.000, 6.941, 12, and 16.

$$\text{Amount of lithium carbonate (mass\%)} = \{0.1 \times (B - A)/1000\} \times \{73.882/(20 \times 60/100)\} \times 100$$

$$\text{Amount of lithium hydroxide (mass\%)} = \{0.1 \times (2A - B)/1000\} \times \{23.941/(20 \times 60/100)\} \times 100$$

From the calculated amount of lithium carbonate and the calculated amount of lithium hydroxide, the amount of a substance of lithium that was included in the amount of lithium carbonate and the amount of the substance of lithium that was included in the amount of lithium hydroxide were calculated, and the total value of the amount of the substance of lithium that was included in the amount of lithium carbonate and the amount of the substance of lithium that was included in the amount of lithium hydroxide was regarded as the amount of the substance of Li excluding Li that was contained in the crystal structure of the raw material compound.

<Calculation of Sauter average particle diameter $D_{32}$ of sprayed liquid droplets>

For the Sauter average particle diameter $D_{32}$ of sprayed liquid droplets, mist was caught on a plate glass coated with silicone oil in a predetermined thickness, an enlarged photograph was rapidly captured, and the number of liquid droplets was counted from the obtained enlarged photograph by size. With an assumption that the number of liquid droplets having a diameter of $d_i$ was $n_i$, the Sauter average particle diameter $D_{32}$ of the sprayed liquid droplets was calculated from the following equation.

$$D_{32} = (\Sigma n_i d_i^3)/(\Sigma n_i d_i^2)$$

<Element analysis of coating material>

The lithium metal composite oxide powder was sliced using a focused ion beam (FIB) device, the cross section of the lithium metal composite oxide powder was observed with an analysis electron microscope (ARM200F manufactured by JEOL Ltd.), and an EELS line analysis of a coating material in a direction toward the inside of the lithium metal composite oxide powder from the outermost surface of the lithium metal composite oxide powder was carried out using an EELS detector (Quantum ER manufactured by Gatan, Inc.), whereby the presence or absence of Li and an element M was confirmed.

<Observation of single particles>

The lithium metal composite oxide powder was observed with a scanning electron microscope, and the presence of single particles independent of primary particles or secondary particles was confirmed.

«Measurement of self-discharge rate»

The self-discharge rate was measured by the following method.
A lithium secondary battery (coin-type cell) was produced using a lithium metal composite oxide powder obtained by a method, which will be described below, as a positive electrode active material. A paste-form positive electrode mixture was prepared by adding and kneading the lithium metal composite oxide powder obtained by the method, which will be described below, a conductive material (acetylene black), and a binder (PVdF) to obtain a composition having a mass ratio of 92:5:3. At the time of adjusting a positive electrode mixture, N-methyl-2-pyrrolidone was used as an organic solvent.
The obtained positive electrode mixture was applied to a 40 $\mu$m-thick Al foil, which was to serve as a current collector, and dried in a vacuum at 150°C for eight hours, thereby obtaining a positive electrode for a lithium secondary battery. The electrode area of the positive electrode for a lithium secondary battery was set to 1.65 cm². 
A lithium secondary battery (coin-type battery R2032; hereinafter, referred to as "coin-type battery" in some cases) was produced using the obtained positive electrode for a lithium secondary battery. The positive electrode for the lithium secondary battery was placed on the lower lid of a coin cell for the coin-type battery R2032 (manufactured by Hohsen Corp.) with the aluminum foil surface facing downward, and a laminate film separator (a heat-resistant porous layer laminated (thickness: 25 $\mu$m) on a polypropylene porous film) was placed on the positive electrode. An electrolytic solution (300 $\mu$L) was poured thereinto. The electrolytic solution that was used was prepared by dissolving $LiPF_6$ in a liquid mixture of ethylene carbonate, dimethyl carbonate, and ethyl methyl carbonate in a volume ratio of 30:35:35 to reach 1.0 mol/L.

Next, lithium metal was used as a negative electrode, the negative electrode was placed on the upper side of the laminate film separator, and the upper lid was placed through a gasket and caulked using a caulking machine, thereby producing a lithium secondary battery.

Furthermore, a test was carried out as described below using the obtained coin-type battery.

The coin-type battery was charged at a testing temperature of 25°C with a maximum charging voltage of 4.4 V and a charging current of 0.5 CA in a constant current constant voltage mode until the current value reached 0.05 CA. After that, the coin-type battery was constant-current-discharged up to 2.5 V with a discharge current value of 0.5 CA, and a discharge capacity before storage was measured.

Next, the coin-type battery was charged at a testing temperature of 25°C with a maximum charging voltage of 4.4 V and a charging current of 0.5 CA in the constant current constant voltage mode until the current value reached 0.05 CA, and then the coin-type battery in a charged state was stored at a testing temperature of 60°C for seven days. After the storage, the coin-type battery was constant-current-discharged at 25°C up to 2.5 V at a discharge current value of 0.5 CA, and the storage capacity was measured. The self-discharge rate was calculated from the following equation.

$$\text{Self-discharge rate (\%)} = (\text{storage capacity} / \text{discharge capacity before storage}) \times 100$$

<<Example 1>>

1. Production of lithium metal composite oxide powder A1

After water was poured into a reaction vessel equipped with a stirrer and an overflow pipe, a sodium hydroxide aqueous solution was added thereto. The liquid temperature in the reaction vessel was held at 60°C.

A nickel sulfate aqueous solution, a cobalt sulfate aqueous solution, a manganese sulfate aqueous solution, and a zirconium sulfate aqueous solution were mixed in proportions in which the mole ratio (Ni:Co:Mn) reached 0.60: 0.20: 0.20 and Zr/(Ni + Co + Mn) reached 0.005, thereby preparing a mixed raw material liquid 1.

Next, the mixed raw material liquid 1 and an ammonium sulfate aqueous solution, as a complexing agent, were continuously added into the reaction vessel under stirring. A sodium hydroxide aqueous solution was timely added dropwise such that the pH of the solution in the reaction vessel reached 11.9. A nickel-containing transition metal composite hydroxide was obtained, washed, then, dehydrated with a centrifuge, washed, dehydrated, isolated, and dried at 105°C, thereby obtaining a nickel-containing transition metal composite hydroxide A1, which was a precursor.

The nickel-containing transition metal composite hydroxide A1 and lithium hydroxide monohydrate were weighed and mixed in proportions in which the mole ratio Li/(Ni + Co + Mn) reached 1.05, then, calcined at 650°C for five hours in an oxygen atmosphere, and then further calcined at 970°C for five hours in an oxygen atmosphere, thereby obtaining a raw material compound A1.

As a result of the composition analysis of the raw material compound A1, p was 0.023, q was 0.198, and r was 0.199 in a composition formula (II).

The raw material compound A1 and a boric acid powder were mixed in proportions in which the mole ratio B/(Ni + X) reached 0.02, thereby obtaining a raw material mixture A1.

The ratio (B/Li) of the amount of a substance of B to the amount of the substance of Li excluding Li that was contained in the crystal structure of the raw material compound A1 in the raw material mixture A1 was 1.9.

The raw material mixture A1 was thermally treated at 500°C for five hours, thereby obtaining a lithium metal composite oxide powder A1.

As a result of the composition analysis of the lithium metal composite oxide powder A1, m was 0.015 and n was 0.406 in the composition formula (I), and m1 was 0.015, n12 was 0.195, n13 was 0.196, and n14 was 0.015 in the composition formula (I)-1. In addition, as a result of an EELS line analysis of the obtained lithium metal composite oxide powder A1, it was confirmed that the coating material contained Li and B. The obtained lithium metal composite oxide powder A1 was used as a positive electrode active material A1, and evaluation was carried out using the above-described coin-type battery.

<<Example 2>>

1. Production of lithium metal composite oxide powder A2

After water was poured into a reaction vessel equipped with a stirrer and an overflow pipe, a sodium hydroxide aqueous solution was added thereto. The liquid temperature in the reaction vessel was held at 60°C.

A nickel sulfate aqueous solution, a cobalt sulfate aqueous solution, and a manganese sulfate aqueous solution were mixed in proportions in which the mole ratio (Ni:Co:Mn) reached 0.60: 0.20: 0.20, thereby preparing a mixed raw material liquid 2.

Next, the mixed raw material liquid 2 and an ammonium sulfate aqueous solution, as a complexing agent, were continuously added into the reaction vessel under stirring. A sodium hydroxide aqueous solution was timely added dropwise such that the pH of the solution in the reaction vessel reached 11.7. A nickel-containing transition metal composite hydroxide was obtained, washed, then, dehydrated with a centrifuge, washed, dehydrated, isolated, and dried at 105°C, thereby obtaining a nickel-containing transition metal composite hydroxide A2, which was a precursor.

The nickel-containing transition metal composite hydroxide A2 and lithium hydroxide monohydrate were weighed and mixed in proportions in which the mole ratio Li/(Ni + Co + Mn) reached 1.05, then, calcined at 650°C for five hours in an oxygen atmosphere, and then further calcined at 955°C for five hours in an oxygen atmosphere, thereby obtaining a raw material compound A2.

As a result of the composition analysis of the raw material compound A2, p was 0.020, q was 0.200, and r was 0.198 in a composition formula (II).

The raw material compound A2 was poured into a Lodige mixer, and the raw material compound A2 was heated to 113°C.

A coating raw material solution 1-A2 containing B obtained by dissolving boric acid in pure water was adjusted to a liquid temperature of 20°C, and the coating raw material solution 1-A2 was sprayed while stirring the raw material compound A2 at 113°C in proportions in which B/(Ni + X) reached 0.02, thereby bringing the raw material compound A2 and the coating raw material solution 1-A2 into contact with each other.

Furthermore, the content rate of a solvent that was contained in the coating raw material solution 1-A2 was adjusted to 2.7 mass%, thereby obtaining a raw material mixture A2. Here, the concentration of B in the coating raw material solution 1-A2 was 0.40 mol/L, and the ratio (B/Li) of the amount of a substance of B to the amount of the substance of Li excluding Li that was contained in the crystal structure of the raw material compound A2 in the raw material mixture A2 was set to 7.8.

In addition, the Sauter average particle diameter $D_{32}$ of the sprayed liquid droplets of the coating raw material solution 1-A2 was 45 $\mu$m, and the ratio ($DP_{50}/D_{32}$) of the median diameter $DP_{50}$ of the raw material compound A2 to the Sauter average particle diameter $D_{32}$ was 0.14.

The raw material mixture A2 was thermally treated at 250°C for five hours, thereby obtaining a lithium metal composite oxide powder A2.

As a result of the composition analysis of the lithium metal composite oxide powder A2, m was 0.010 and n was 0.409 in the composition formula (I), and m1 was 0.010, n12 was 0.196, n13 was 0.194, and n14 was 0.019 in the composition formula (I)-1. The obtained lithium metal composite oxide powder A2 was used as a positive electrode active material A2, and evaluation was carried out using the above-described coin-type battery.

<<Example 3>>

1. Production of lithium metal composite oxide powder A3

The raw material compound A2 obtained in Example 2 was thermally treated at 500°C for five hours, thereby obtaining a lithium metal composite oxide powder A3.

As a result of the composition analysis of the lithium metal composite oxide powder A3, m was 0.010 and n was 0.409 in the composition formula (I), and m1 was 0.010, n12 was 0.196, n13 was 0.194, and n14 was 0.019 in the composition formula (I)-1. The obtained lithium metal composite oxide powder A4 was used as a positive electrode active material A4, and evaluation was carried out using the above-described coin-type battery.

<<Example 4>>

1. Production of lithium metal composite oxide powder A4

Boric acid was dissolved in pure water adjusted to 25°C, furthermore, the raw material compound A2 obtained in Example 2 was added thereto, and a lithium compound that remained in the raw material compound A2 was dissolved, thereby immersing the raw material compound A2 in a coating raw material solution 2-A4 containing boron and lithium. After that, the liquid content of the solvent was adjusted to 15 mass% by filtration, thereby obtaining a raw material mixture A4. At this time, the amount of the boric acid dissolved in the pure water was adjusted such that B/(Ni + X) reached 0.01. Here, the amount of the coating raw material solution 2-A4 with respect to the raw material compound A4 was 1.0 time based on the weight, the concentration of Li that was contained in the coating raw material solution 2-A4 was 0.026 mol/L, and the ratio (B/Li) of the amount of a substance of B to the amount of the substance of Li excluding Li that was contained in the crystal structure of the raw material compound A2 in the raw material mixture A4 was 26.

The raw material mixture A4 was thermally treated at 300°C for five hours, thereby obtaining a lithium metal composite oxide powder A4.

As a result of the composition analysis of the lithium metal composite oxide powder A4, m was 0.017 and n was 0.402 in the composition formula (I), and m1 was 0.017, n12 was 0.198, n13 was 0.196, and n14 was 0.008 in the composition formula (I)-1. The obtained lithium metal composite oxide powder A4 was used as a positive electrode active material A4, and evaluation was carried out using the above-described coin-type battery.

<<Example 5>>

1. Production of lithium metal composite oxide powder A5

Boric acid was dissolved in pure water adjusted to 25°C, furthermore, the raw material compound A2 obtained in Example 2 was added thereto, and a lithium compound that remained in the raw material compound A2 was dissolved, thereby immersing the raw material compound A2 in a coating raw material solution 2-A5 containing boron and lithium. After that, the liquid content of the solvent was adjusted to 15 mass% by filtration, thereby obtaining a raw material mixture A5. At this time, the amount of the boric acid dissolved in the pure water was adjusted to a proportion in which B/(Ni + X) reached 0.001. Here, the amount of the coating raw material solution 2-A5 with respect to the raw material compound A5 was 1.0 time based on the weight, the concentration of Li that was contained in the coating raw material solution 2-A5 was 0.026 mol/L, and the ratio (B/Li) of the amount of a substance of B to the amount of the substance of Li excluding Li that was contained in the crystal structure of the raw material compound A2 in the raw material mixture A5 was 2.6.

The raw material mixture A5 was thermally treated at 300°C for five hours, thereby obtaining a lithium metal composite oxide powder A5.

As a result of the composition analysis of the lithium metal composite oxide powder A5, m was 0.021 and n was 0.398 in the composition formula (I), and m1 was 0.021, n12 was 0.200, n13 was 0.197, and n14 was 0.001 in the composition formula (I)-1. The obtained lithium metal composite oxide powder A5 was used as a positive electrode active material A5, and evaluation was carried out using the above-described coin-type battery.

<<Example 6>>

1. Production of lithium metal composite oxide powder A6

Boric acid was dissolved in pure water adjusted to 25°C, furthermore, the raw material compound A2 obtained in Example 2 was added thereto, and a lithium compound that remained in the raw material compound A2 was dissolved, thereby immersing the raw material compound A2 in a coating raw material solution 2-A6 containing boron and lithium. After that, the liquid content of the solvent was adjusted to 14 mass% by filtration, thereby obtaining a raw material mixture A6. At this time, the amount of the boric acid dissolved in the pure water was adjusted to a proportion in which B/(Ni + X) reached 0.0001. Here, the amount of the coating raw material solution 2-A6 with respect to the raw material compound A2 was 1.0 time based on the weight, the concentration of Li that was contained in the coating raw material solution 2-A6 was 0.026 mol/L, and the ratio (B/Li) of the amount of a substance of B to the amount of the substance of Li excluding Li that was contained in the crystal structure of the raw material compound A2 in the raw material mixture A6 was 0.26.

The raw material mixture A6 was thermally treated at 300°C for five hours, thereby obtaining a lithium metal composite oxide powder A6.

As a result of the composition analysis of the lithium metal composite oxide powder A6, m was 0.022 and n was 0.398 in the composition formula (I), and m1 was 0.022, n12 was 0.199, n13 was 0.198, and n14 was 0.001 in the composition formula (I)-1. The obtained lithium metal composite oxide powder A6 was used as a positive electrode active material A6, and evaluation was carried out using the above-described coin-type battery.

<<Example 7>>

1. Production of lithium metal composite oxide powder A7

Lithium phosphate was dissolved in pure water adjusted to 25°C, furthermore, the raw material compound A1 obtained in Example 1 was added thereto, and a lithium compound and lithium phosphate that remained in the raw material compound A1 was dissolved, thereby immersing the raw material compound A1 in a coating raw material solution 2-A7 containing phosphorus and lithium. After that, the liquid content of the solvent was adjusted to 15 mass% by filtration, thereby obtaining a raw material mixture A7. At this time, the amount of the lithium phosphate dissolved in the pure water was adjusted to a proportion in which P/(Ni + X) reached 0.01. Here, the amount of the coating raw material solution 2-A7 with respect to the raw material compound A7 was 1.0 time based on the weight, the concentration of Li that was contained in the coating raw material solution 2-A7 was 0.47 mol/L, and the ratio (P/Li) of the amount of a substance of P to the amount of the substance of Li excluding Li that was contained in the crystal structure of the raw material compound A1 in the raw material mixture A7 was 1.5.

The raw material mixture A7 was thermally treated at 500°C for five hours, thereby obtaining a lithium metal composite oxide powder A7.

As a result of the composition analysis of the lithium metal composite oxide powder A7, m was 0.014 and n was 0.404 in the composition formula (I), and m1 was 0.014, n12 was 0.196, n13 was 0.198, and n14 was 0.010 in the composition formula (I)-1. The obtained lithium metal composite oxide powder A7 was used as a positive electrode active material A7, and evaluation was carried out using the above-described coin-type battery.

<<Example 8>>

1. Production of lithium metal composite oxide powder A8

Niobium pentoxide was dispersed in pure water adjusted to 25°C, furthermore, the raw material compound A1 obtained in Example 1 was added thereto, and a lithium compound that remained in the raw material compound A1 was dissolved, thereby immersing the raw material compound A1 in a coating raw material solution 2-A8 containing niobium and lithium. After that, the liquid content of the solvent was adjusted to 15 mass% by filtration, thereby obtaining a raw material mixture A8. At this time, the amount of the lithium phosphate dissolved in the pure water was adjusted to a proportion in which Nb/(Ni + X) reached 0.01. Here, the amount of the coating raw material solution 2-A8 with respect to the raw material compound A8 was 1.0 time based on the weight, the concentration of Li that was contained in the coating raw material solution 2-A8 was 0.16 mol/L, and the ratio (Nb/Li) of the amount of a substance of Nb to the amount of the substance of Li excluding Li that was contained in the crystal structure of the raw material compound A1 in the raw material mixture A8 was 4.2.

The raw material mixture A8 was thermally treated at 500°C for five hours, thereby obtaining a lithium metal composite oxide powder A8.

As a result of the composition analysis of the lithium metal composite oxide powder A8, m was 0.015 and n was 0.404 in the composition formula (I), and m1 was 0.015, n12 was 0.196, n13 was 0.207, and n14 was 0.000 in the composition formula (I)-1. The obtained lithium metal composite oxide powder A8 was used as a positive electrode active material A8, and evaluation was carried out using the above-described coin-type battery.

<<Example 9>>

1. Production of lithium metal composite oxide powder A9

After water was poured into a reaction vessel equipped with a stirrer and an overflow pipe, a sodium hydroxide aqueous solution was added thereto. The liquid temperature in the reaction vessel was held at 60°C.

A nickel sulfate aqueous solution, a cobalt sulfate aqueous solution, and a manganese sulfate aqueous solution were mixed in proportions in which the mole ratio (Ni:Co:Mn) reached 0.91: 0.07: 0.02, thereby preparing a mixed raw material liquid 9.

Next, the raw material mixture solution 9 and an ammonium sulfate aqueous solution, as a complexing agent, were continuously added into the reaction vessel under stirring. A sodium hydroxide aqueous solution was timely added dropwise such that the pH of the solution in the reaction vessel reached 11.6. A nickel-containing transition metal composite hydroxide was obtained, washed, then, dehydrated with a centrifuge, washed, dehydrated, isolated, and dried at 105°C, thereby obtaining a nickel-containing transition metal composite hydroxide A9, which was a precursor.

The nickel-containing transition metal composite hydroxide A9, lithium hydroxide monohydrate, and a potassium sulfate powder were weighed and mixed in proportions in which the mole ratio Li/(Ni + Co + Mn) reached 1.26 and

$K_2SO_4/(LiOH + K_2SO_4)$ reached 0.1 (mol/mol), and then calcined at 790°C for 10 hours in an oxygen atmosphere, thereby obtaining a raw material compound A9.

As a result of the composition analysis of the raw material compound A9, p was 0.015, q was 0.068, and r was 0.020 in a composition formula (II).

The raw material compound A9, boric acid was dissolved in pure water adjusted to 25°C, furthermore, the raw material compound A9 was added thereto, and a lithium compound that remained in the raw material compound A9 was dissolved, thereby immersing the raw material compound A9 in a coating raw material solution 2-A9 containing boron and lithium. After that, the liquid content of the solvent was adjusted to 17 mass% by filtration, thereby obtaining a raw material mixture A9. At this time, the amount of the boric acid dissolved in the pure water was adjusted in a proportion in which B/(Ni + X) reached 0.01. Here, the amount of the coating raw material solution 2-A9 with respect to the raw material compound A4 was 1.0 time based on the weight, the concentration of Li that was contained in the coating raw material solution 2-A9 was 0.62 mol/L, and the ratio (B/Li) of the amount of a substance of B to the amount of the substance of Li excluding Li that was contained in the crystal structure of the raw material compound A9 in the raw material mixture A9 was 1.1.

The raw material mixture A9 was thermally treated at 250°C for five hours, thereby obtaining a lithium metal composite oxide powder A9.

As a result of the composition analysis of the lithium metal composite oxide powder A9, m was 0.010 and n was 0.097 in the composition formula (I), and m1 was 0.010, n12 was 0.067, n13 was 0.020, and n14 was 0.010 in the composition formula (I)-1. The obtained lithium metal composite oxide powder A9 was used as a positive electrode active material A9, and evaluation was carried out using the above-described coin-type battery.

<<Comparative Example 1>>

1. Production of lithium metal composite oxide powder C1

The nickel-containing transition metal composite hydroxide A1 obtained in Example 1 and lithium hydroxide monohydrate were weighed and mixed in proportions in which the mole ratio Li/(Ni + Co + Mn) reached 1.07, then, calcined at 650°C for five hours in an oxygen atmosphere, and then further calcined at 970°C for five hours in an oxygen atmosphere, thereby obtaining a lithium metal composite oxide powder C1.

As a result of the composition analysis of the lithium metal composite oxide powder C1, m was 0.016 and n was 0.397 in the composition formula (I), and m1 was 0.016, n12 was 0.198, n13 was 0.199, and n14 was 0.000 in the composition formula (I)-1. The obtained lithium metal composite oxide powder C1 was used as a positive electrode active material C1, and evaluation was carried out using the above-described coin-type battery.

<<Comparative Example 2>>

1. Production of lithium metal composite oxide powder C2

The nickel-containing transition metal composite hydroxide A1 obtained in Example 1 and lithium hydroxide monohydrate were weighed and mixed in proportions in which the mole ratio Li/(Ni + Co + Mn) reached 1.05, then, calcined at 650°C for five hours in an oxygen atmosphere, and then further calcined at 1015°C for five hours in an oxygen atmosphere, thereby obtaining a raw material compound C2.

As a result of the composition analysis of the raw material compound C2, p was 0.004, q was 0.199, and r was 0.252 in a composition formula (II).

The raw material compound C2 and a boric acid powder were mixed in proportions in which the mole ratio B/(Ni + X) reached 0.02, thereby obtaining a raw material mixture C2. The ratio (B/Li) of the amount of a substance of B to the amount of the substance of Li excluding Li that was contained in the crystal structure of the raw material compound C2 in the raw material mixture C2 was 2.9.

The raw material mixture C2 was thermally treated at 400°C for five hours, thereby obtaining a lithium metal composite oxide powder C2.

As a result of the composition analysis of the lithium metal composite oxide powder C2, m was -0.004 and n was 0.460 in the composition formula (I), and m1 was - 0.004, n12 was 0.196, n13 was 0.248, and n14 was 0.016 in the composition formula (I)-1. The obtained lithium metal composite oxide powder C2 was used as a positive electrode active material C2, and evaluation was carried out using the above-described coin-type battery.

<<Comparative Example 3>>

1. Production of lithium metal composite oxide powder C3

The nickel-containing transition metal composite hydroxide A9 obtained in Example 9, lithium hydroxide monohydrate, and a potassium sulfate powder were weighed and mixed in proportions in which the mole ratio Li/(Ni + Co + Mn) reached 1.10 and $K_2SO_4$/(LiOH + $K_2SO_4$) reached 0.1 (mol/mol), and then calcined at 775°C for 10 hours in an oxygen atmosphere, thereby obtaining a calcined product C3. The calcined product C3 is added to pure water adjusted to 5°C, stirred, dehydrated, furthermore, rinsed with pure water that was as much as twice the weight of the calcined product C3 and adjusted to 5°C, then, isolated, and dried at 150°C, thereby obtaining a raw material compound C3.
As a result of the composition analysis of the raw material compound C3, p was 0.015, q was 0.068, and r was 0.020 in a composition formula (II).
The raw material compound C3 and a boric acid powder were mixed in proportions in which the mole ratio B/(Ni + X) reached 0.01, thereby obtaining a raw material mixture C3. The ratio (B/Li) of the amount of a substance of B to the amount of the substance of Li excluding Li that was contained in the crystal structure of the raw material compound C3 in the raw material mixture C3 was 0.70.
The raw material mixture C3 was thermally treated at 300°C for five hours, thereby obtaining a lithium metal composite oxide powder C3.
As a result of the composition analysis of the lithium metal composite oxide powder C3, m was 0.010 and n was 0.097 in the composition formula (I), and m1 was 0.010, n12 was 0.067, n13 was 0.020, and n14 was 0.010 in the composition formula (I)-1. The obtained lithium metal composite oxide powder C3 was used as a positive electrode active material C3, and evaluation was carried out using the above-described coin-type battery.

<<Comparative Example 4>>

1. Production of lithium metal composite oxide powder C4

Boric acid was dissolved in pure water, thereby adjusting a coating raw material solution 1-C4 containing boron. The raw material compound A2 obtained in Example 2 was adjusted to 20°C, the coating raw material solution 1-C4 was adjusted to 20°C, the raw material compound A2 was added dropwise to the coating raw material solution 1-C4 in a proportion in which B/(Ni + X) reached 0.02 with flowing water while preventing the raw material compound A2 from falling into a sprayed state, and then the raw material compound A2 was heated and dried in a static state, thereby adjusting the liquid content of the solvent to 6.9 mass% and obtaining a raw material mixture C4. Here, the concentration of B in the coating raw material solution 1-C4 was 0.40 mol/L, and the ratio (B/Li) of the amount of a substance of B to the amount of the substance of Li excluding Li that was contained in the crystal structure of the raw material compound A2 in the raw material mixture C4 was 7.8.
The raw material mixture C4 was thermally treated at 180°C for five hours, thereby obtaining a lithium metal composite oxide powder C4.
As a result of the composition analysis of the lithium metal composite oxide powder C4, m was 0.010 and n was 0.409 in the composition formula (I), and m1 was 0.010, n12 was 0.196, n13 was 0.194, and n14 was 0.019 in the composition formula (I)-1. The obtained lithium metal composite oxide powder C4 was used as a positive electrode active material C4, and evaluation was carried out using the above-described coin-type battery.

<<Comparative Example 5>>

1. Production of lithium metal composite oxide powder C5

The raw material mixture C4 of Comparative Example 4 was thermally treated at 250°C for five hours, thereby obtaining a lithium metal composite oxide powder C5.
As a result of the composition analysis of the lithium metal composite oxide powder C5, m was 0.010 and n was 0.409 in the composition formula (I), and m1 was 0.010, n12 was 0.196, n13 was 0.194, and n14 was 0.019 in the composition formula (I)-1. The obtained lithium metal composite oxide powder C5 was used as a positive electrode active material C5, and evaluation was carried out using the above-described coin-type battery.

[Table 1]

| | Composition formula (II) of raw material compound | | | Coating material addition conditions | | | | | Step (bl) | | | | Step (b1-1) | | Step (b2) | | | Step (c) |
|---|---|---|---|---|---|---|---|---|---|---|---|---|---|---|---|---|---|---|
| | p | q | r | Element M | | | Contacting method of coating raw material | Content rate of solvent | Temperature of raw material compound | Coating raw material solution 1 | | D32 | DP50 /D32 | | Coating raw material solution 2 | | | Thermal treatment |
| | | | | M- | M/Li- | M/(Ni+X)- | - | % | °C | Liquid temperature °C | M concentration mol/L | μm | - | Amount of solution times | Liquid temperature °C | Li concentration mol/L | °C |
| Example 1 | 0.023 | 0.198 | 0.199 | B | 1.9 | 0.02 | Addition of powder | 0.0 | - | - | - | - | - | - | - | - | - | 500 |
| Example 2 | 0.020 | 0.200 | 0.198 | B | 7.8 | 0.02 | Spraying/ stirring/ drying | 2.7 | 113 | 20 | 0.4 | 45 | 0.14 | - | - | - | 250 |
| Example 3 | 0.020 | 0.200 | 0.198 | B | 7.8 | 0.02 | Spraying/ stirring/ drying | 2.7 | 113 | 20 | 0.4 | 45 | 0.14 | - | - | - | 500 |
| Example 4 | 0.021 | 0.200 | 0.198 | B | 26 | 0.01 | Immersion/stirring/filtration | 15 | - | - | - | - | - | 1.0 | 25 | 0.026 | 300 |
| Example 5 | 0.021 | 0.200 | 0.197 | B | 2.6 | 0.001 | Immersion/stirring/filtration | 15 | - | - | - | - | - | 1.0 | 25 | 0.026 | 300 |
| Example 6 | 0.022 | 0.199 | 0.198 | B | 0.26 | 0.0001 | Immersion/stirring/filtration | 14 | - | - | - | - | - | 1.0 | 25 | 0.026 | 300 |

(continued)

| | Composition formula (II) of raw material compound | | | Coating material addition conditions | | | | Step (bl) | | | Step (b1-1) | | Step (b2) | | | Step (c) |
|---|---|---|---|---|---|---|---|---|---|---|---|---|---|---|---|---|
| | p | q | r | Element M | | | Contacting method of coating raw material | Content rate of solvent | Temperature of raw material compound | Coating raw material solution 1 | | D32 | DP50/D32 | Coating raw material solution 2 | | | Thermal treatment |
| | | | | M- | M/Li- | M/(Ni + X)- | - | % | °C | Liquid temperature °C | M concentration mol/L | μm | - | Amount of solution times | Liquid temperature °C | Li concentration mol/L | °C |
| Example 7 | 0.019 | 0.198 | 0.200 | P | 1.5 | 0.01 | Immersion/stirring/filtration | 15 | - | - | - | - | - | 1.0 | 25 | 0.47 | 500 |
| Example 8 | 0.020 | 0.198 | 0.200 | Nb | 4.2 | 0.01 | Immersion/stirring/filtration | 15 | - | - | - | - | - | 1.0 | 25 | 0.16 | 500 |
| Example 9 | 0.015 | 0.068 | 0.020 | B | 1.1 | 0.01 | Immersion/stirring/filtration | 17 | - | - | - | - | - | 1.0 | 25 | 0.62 | 250 |
| Comparative Example 1 | 0.016 | 0.198 | 0.199 | - | 0.0 | 0 | - | - | - | - | - | - | - | - | - | - | - |
| Comparative Example 2 | 0.004 | 0.199 | 0.252 | B | 2.9 | 0.02 | Addition of powder | 0.0 | - | - | - | - | - | - | - | - | 400 |
| Comparative Example 3 | 0.015 | 0.068 | 0.020 | B | 0.7 | 0.01 | Addition of powder | 0.0 | - | - | - | - | - | - | - | - | 300 |

| | Composition formula (II) of raw material compound | | | Coating material addition conditions | | | | | Step (bl) | | Step (b1-1) | | Step (b2) | | | Step (c) |
|---|---|---|---|---|---|---|---|---|---|---|---|---|---|---|---|---|
| | p | q | r | Element M | | | Contacting method of coating raw material | Content rate of solvent | Temperature of raw material compound | Coating raw material solution 1 | | D32 | DP50 /D32 | Coating raw material solution 2 | | | Thermal treatment |
| | | | | M- | M/Li- | M/(Ni+ X)- | - | % | °C | Liquid temperature °C | M concentration mol/L | µm | - | Amount of solution times | Liquid temperature °C | Li concentration mol/L | °C |
| Comparative Example 4 | 0.020 | 0.200 | 0.198 | B | 7.8 | 0.02 | Flowing water/left to stand/ drying | 6.9 | - | 20 | 0.4 | - | - | - | - | - | 180 |
| Comparative Example 5 | 0.020 | 0.200 | 0.198 | B | 7.8 | 0.02 | Flowing water/left to stand/ drying | 6.9 | - | 20 | 0.4 | - | - | - | - | - | 250 |

EP 3 954 660 A1

[Table 2]

| | Composition formula (I) | | | Composition formula (I)-1 | | | | R | | | Particle diameter | | Evaluation of coin-type battery | | | |
|---|---|---|---|---|---|---|---|---|---|---|---|---|---|---|---|---|
| | m | n | Element M | m1 | n12 | n13 | n14 | R (90) | R (10) | R (50) | um $D_{50}$ | $(D_{90} - D_{10})/D_{50}$ | Charging mAh/g | Discharging mAh/g | Charging and discharging efficiency % | Self-discharge rate % |
| Example 1 | 0.015 | 0.406 | B | 0.015 | 0.195 | 0.196 | 0.015 | 2.2 | 1.2 | 1.6 | 5.2 | 0.90 | 210 | 173 | 82.1 | 7.8 |
| Example 2 | 0.010 | 0.409 | B | 0.010 | 0.196 | 0.194 | 0.019 | 3.2 | 2.2 | 2.6 | 4.5 | 1.29 | 206 | 170 | 82.7 | 9.2 |
| Example 3 | 0.010 | 0.409 | B | 0.010 | 0.196 | 0.194 | 0.019 | 3.0 | 1.8 | 2.2 | 4.4 | 1.27 | 203 | 162 | 79.8 | 8.7 |
| Example 4 | 0.017 | 0.406 | B | 0.017 | 0.198 | 0.196 | 0.008 | 3.0 | 2.4 | 2.6 | 4.7 | 1.21 | 210 | 177 | 84.0 | 9.2 |
| Example 5 | 0.021 | 0.398 | B | 0.021 | 0.200 | 0.197 | 0.001 | 2.8 | 2.0 | 2.2 | 4.6 | 1.28 | 212 | 177 | 83.3 | 11.7 |
| Example 6 | 0.022 | 0.398 | B | 0.022 | 0.199 | 0.198 | 0.001 | 2.4 | 2.0 | 2.2 | 4.4 | 1.25 | 210 | 173 | 82.6 | 11.8 |
| Example 7 | 0.014 | 0.404 | P | 0.014 | 0.196 | 0.198 | 0.010 | 3.4 | 2.4 | 2.6 | 5.4 | 1.13 | 207 | 178 | 85.8 | 10.5 |
| Example 8 | 0.015 | 0.404 | Nb | 0.015 | 0.196 | 0.207 | 0.000 | 3.0 | 2.4 | 2.6 | 5.6 | 1.07 | 207 | 178 | 86.1 | 9.8 |
| Example 9 | 0.010 | 0.097 | B | 0.010 | 0.067 | 0.020 | 0.010 | 2.2 | 1.8 | 2.0 | 3.0 | 1.32 | 239 | 199 | 83.4 | 9.8 |
| Comparative Example 1 | 0.016 | 0.397 | - | 0.016 | 0.198 | 0.199 | 0.000 | 1.6 | 1.0 | 1.2 | 5.8 | 2.82 | 209 | 175 | 83.6 | 14.2 |
| Comparative Example 2 | -0.004 | 0.460 | B | -0.004 | 0.196 | 0.248 | 0.016 | 3.8 | 2.2 | 3.0 | 4.7 | 0.83 | 195 | 161 | 79.5 | 14.0 |
| Comparative Example 3 | 0.010 | 0.097 | B | 0.010 | 0.067 | 0.020 | 0.010 | 9.4 | 3.4 | 4.2 | 4.3 | 0.89 | 237 | 208 | 87.6 | 15.0 |
| Comparative Example 4 | 0.010 | 0.409 | B | 0.010 | 0.196 | 0.194 | 0.019 | 3.8 | 2.4 | 2.6 | 5.7 | 1.26 | 202 | 168 | 83.4 | 14.8 |
| Comparative Example 5 | 0.010 0.409 | | B 0.010 | | 0.196 | 0.194 | 0.019 | 4.0 | 2.2 | 2.8 | 5.9 | 1.27 | 206 | 172 | 83.5 | 16.3 |

EP 3 954 660 A1

As shown in the above-shown results, it was possible to confirm that the positive electrode active materials of Examples 1 to 9 to which the present invention was applied had a small self-discharge rate compared with those of Comparative Examples 1 to 5.

In addition, as a result of observing the lithium metal composite oxide powder of Example 1 using a transmission electron microscope, it was confirmed that the coating material was amorphous.

[Reference Signs List]

| | |
|---|---|
| 1: | Separator |
| 2: | Positive electrode |
| 3: | Negative electrode |
| 4: | Electrode group |
| 5: | Battery can |
| 6: | Electrolytic solution |
| 7: | Top insulator |
| 8: | Sealing body |
| 10: | Lithium secondary battery |
| 21: | Positive electrode lead |
| 31: | Negative electrode lead |
| 100: | Laminate |
| 110: | Positive electrode |
| 111: | Positive electrode active material layer |
| 112: | Positive electrode current collector |
| 113: | External terminal |
| 120: | Negative electrode |
| 121: | Negative electrode electrolyte layer |
| 122: | Negative electrode current collector |
| 123: | External terminal |
| 130: | Solid electrolyte layer |
| 200: | Exterior body |
| 200a: | Opening portion |
| 1000: | All-solid-state lithium-ion battery |

**Claims**

1. A lithium metal composite oxide powder having a layered structure and containing at least Li, Ni, and an element X, the element X being one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P,

   wherein, in a cumulative frequency distribution curve of R that is defined below, which ranges 0% to 100% as a whole, R(90) that is a value of R at a point where a cumulative frequency from a small side of the R reaches 90% is 1.7 or more and 3.7 or less,
   the R is a value of O/(Ni + X) that is a ratio of an amount of a substance of oxygen, which is indicated by O, to a total amount of substances of nickel and the element X, which is indicated by Ni + X, in one particle of a lithium metal composite oxide that is contained in the lithium metal composite oxide powder, and
   the amounts of the substances of nickel, the element X, and oxygen are obtained by energy-dispersive X-ray (EDX) spectroscopy in which an accelerating voltage is set to 1100 V regarding the one particle of the lithium metal composite oxide.

2. The lithium metal composite oxide powder according to Claim 1,
   wherein, in the cumulative frequency distribution curve of R ranging 0% to 100% as a whole, R(10) that is a value of R at a point where the cumulative frequency from the small side of R reaches 10% is 1.1 or more and 3.3 or less.

3. The lithium metal composite oxide powder according to Claim 1 or 2,
   wherein, in the cumulative frequency distribution curve of R ranging 0% to 100% as a whole, R(50) that is a value of R at a point where the cumulative frequency from the small side of R reaches 50% is 1.5 or more and 2.7 or less.

4. The lithium metal composite oxide powder according to any one of Claims 1 to 3,
   wherein the following formula (I) is satisfied,

$$Li[Li_m(Ni_{(1-n)}X_n)_{1-m}]O_2 \dots \qquad (I)$$

($-0.1 \leq m \leq 0.2$ and $0 < n \leq 0.7$).

5. The lithium metal composite oxide powder according to Claim 4,
   wherein m in the formula (I) is $0 < m \leq 0.2$.

6. The lithium metal composite oxide powder according to any one of Claims 1 to 5, comprising:

   a core particle; and
   a coating material.

7. The lithium metal composite oxide powder according to Claim 6,
   wherein the coating material contains a lithium-containing composite compound of Li and an element M, provided
   that the element M is one or more elements selected from Al, Zr, B, Si, S, Nb, F, and P.

8. The lithium metal composite oxide powder according to any one of Claims 1 to 7, further comprising:
   a single particle.

9. The lithium metal composite oxide powder according to any one of Claims 1 to 8,
   wherein, in $D_{10}$ that is a 10% cumulative diameter, $D_{50}$ that is a 50% cumulative diameter, and $D_{90}$ that is a 90%
   cumulative diameter, all of which are obtained from particle size distribution measurement values, $D_{50}$ that is the
   50% cumulative diameter is 0.5 $\mu$m or more and 10 $\mu$m or less, and furthermore, the $D_{90}$ and the $D_{10}$ satisfy a
   relationship of the following formula (A),

$$0.3 \leq (D_{90} - D_{10}) / D_{50} \leq 3 \dots (A).$$

10. A positive electrode active material for a lithium secondary battery, comprising:
    the lithium metal composite oxide powder according to any one of Claims 1 to 9.

11. A method for producing a lithium metal composite oxide powder, comprising:

    the following step (a) to step (c) in the following order,
    the step (a) is a step of mixing a precursor containing at least Ni and a lithium compound containing Li and
    calcining a mixture to obtain a raw material compound,
    the step (b) is a step of bringing a coating raw material containing at least one element M selected from the
    group consisting of Al, B, Si, S, Nb, F, and P and the raw material compound into contact with each other to
    obtain a raw material mixture, and
    the step (c) is a step of thermally treating the raw material mixture at a temperature of 200°C or higher and
    600°C or lower.

12. The method for producing a lithium metal composite oxide powder according to Claim 11,

    wherein the step (b) is a step (b1) of bringing a coating raw material solution 1 containing the element M into
    contact with the raw material compound to obtain the raw material mixture, and
    after the step (b1) and before the step (c), a step (b1-A) of removing a solvent that is contained in the raw
    material mixture and adjusting a content rate of the solvent in the raw material mixture to 30 mass% or less is
    provided.

13. The method for producing a lithium metal composite oxide powder according to Claim 12,
    wherein the step (b1) is a step (b1-1) of bringing the coating raw material solution 1 into contact with the raw material
    compound by spraying to obtain the raw material mixture.

**14.** The method for producing a lithium metal composite oxide powder according to Claim 12 or 13,
wherein, in the step (b1), the raw material compound is adjusted to a temperature of -20°C or higher and 300°C or lower and brought into contact with the coating raw material solution 1.

**15.** The method for producing a lithium metal composite oxide powder according to Claim 13 or 14,
wherein, in the step (b1-1), $D_{32}$ that is a Sauter average particle diameter of sprayed liquid droplets of the coating raw material solution 1 is 10 $\mu$m or more and 500 $\mu$m or less.

**16.** The method for producing a lithium metal composite oxide powder according to any one of Claims 13 to 15,
wherein, in the step (b1-1), a value of $DP_{50}/D_{32}$ that is a ratio of $DP_{50}$ that is a median diameter of the raw material compound to $D_{32}$ that is the Sauter average particle diameter of the sprayed liquid droplets at the time of spraying the coating raw material solution 1 is 0.001 or more and 10 or less.

**17.** The method for producing a lithium metal composite oxide powder according to any one of Claims 12 to 16,
wherein, in the step (b1), a temperature of the coating raw material solution 1 at the time of bringing the coating raw material solution 1 into contact with the raw material compound is -20°C or higher and 300°C or lower.

**18.** The method for producing a lithium metal composite oxide powder according to any one of Claims 12 to 17,
wherein, in the step (b1), a concentration of the element M in the coating raw material solution 1 is 0.001 mol/L or more and 100 mol/L or less.

**19.** The method for producing a lithium metal composite oxide powder according to any one of Claims 12 to 18,

wherein, in the step (b1), a value of M/Li that is a ratio of an amount of a substance of the element M to an amount of a substance of lithium that is contained in the raw material mixture is 0.1 or more and 50 or less, provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

**20.** The method for producing a lithium metal composite oxide powder according to Claim 11,

wherein the step (b) is a step (b2) of immersing the raw material compound in a coating raw material solution 2 containing the element M and lithium to obtain the raw material mixture, and
after the step (b2) and before the step (c), a step (b2-A) of removing a solvent that is contained in the raw material mixture and adjusting a content rate of the solvent in the raw material mixture to 30 mass% or less is provided.

**21.** The method for producing a lithium metal composite oxide powder according to Claim 20,
wherein, in the step (b2), an amount of the coating raw material solution 2 with respect to the raw material compound is 0.1 times or more and 10 times or less based on a weight.

**22.** The method for producing a lithium metal composite oxide powder according to Claim 20 or 21,
wherein a temperature of the coating raw material solution 2 is -20°C or higher and 80°C or lower.

**23.** The method for producing a lithium metal composite oxide powder according to any one of Claims 20 to 22,
wherein, in the step (b2), a concentration of Li that is contained in the coating raw material solution 2 is 0.01 mol/L or more and 10 mol/L or less.

**24.** The method for producing a lithium metal composite oxide powder according to any one of Claims 20 to 23,

wherein, in the step (b2), a value of M/Li that is a ratio of an amount of a substance of the element M to an amount of a substance of lithium that is contained in the raw material mixture is 0.1 or more and 50 or less, provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

**25.** The method for producing a lithium metal composite oxide powder according to Claim 11,

wherein, in the step (b), a value of M/Li that is a ratio of an amount of a substance of the element M to an amount of a substance of lithium that is contained in the raw material mixture is 0.1 or more and 50 or less, provided that the amount of the substance of lithium that is contained in the raw material mixture is defined as an amount obtained by subtracting an amount of the substance of lithium that is contained in a crystal structure of the raw material compound from an amount of the substance of lithium that is contained in the raw material mixture.

**26.** The method for producing a lithium metal composite oxide powder according to any one of Claims 11 to 25,

wherein the raw material compound contains an element X, and, in the step (b), a value of M/(Ni + X) that is a ratio of the element M that is contained in the coating raw material to a value of Ni + X that is a total amount of substances of Ni and the element X that are contained in the raw material compound is 0.0001 or more and 0.05 or less in terms of a mole ratio, provided that the element X is one or more elements selected from the group consisting of Co, Mn, Fe, Cu, Ti, Mg, Ca, Sr, Ba, Al, W, Mo, Nb, Zn, Sn, Zr, Cr, Ga, Ge, Pd, Ag, Cd, In, V, B, Si, S, F, and P.

**27.** The method for producing a lithium metal composite oxide powder according to any one of Claims 11 to 26, wherein the raw material compound satisfies the following formula (II),

$$\mathrm{Li(Li}_p(\mathrm{Ni}_{(1-q-r)}\mathrm{Co}_q\mathrm{X1}_r)_{1-p})\mathrm{O}_2 \dots \qquad \text{(II)}$$

$(-0.1 \leq p \leq 0.2, 0 \leq q \leq 0.4, 0 \leq r \leq 0.4$, and $1-q-r \geq 0.3$ are satisfied, and X1 is one or more elements selected from the group consisting of Mn, Fe, Cu, Ti, Mg, Ca, Sr, Ba, Al, W, Mo, Nb, Zn, Sn, Zr, Cr, Ga, Ge, Pd, Ag, Cd, In, and V).

**28.** A positive electrode for a lithium secondary battery, comprising:
the positive electrode active material for a lithium secondary battery according to Claim 10.

**29.** A lithium secondary battery comprising:
the positive electrode for a lithium secondary battery according to Claim 28.

FIG. 1A

FIG. 1B

FIG. 2

FIG. 3

## INTERNATIONAL SEARCH REPORT

| International application No. |
|---|
| PCT/JP2020/007710 |

**A. CLASSIFICATION OF SUBJECT MATTER**
Int. Cl. G01G53/00(2006.01)i, H01M4/36(2006.01)i, H01M4/505(2010.01)i, H01M4/525(2010.01)i
FI: C01C53/00 A, H01M4/525, H01M4/505, H01M4/36 C
According to International Patent Classification (IPC) or to both national classification and IPC

**B. FIELDS SEARCHED**

Minimum documentation searched (classification system followed by classification symbols)
Int. Cl. C01G53/00, H01M4/36, H01M4/505, H01M4/525

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2018-172255 A (SUMITOMO CHEMICAL CO., LTD.) 08 November 2018, claims 1-9, paragraphs [0009]-[0031], [0040]-[0046], [0050], [0058], [0108]-[0123] | 1-11, 28-29<br>12-27 |
| A | JP 2016-167439 A (SUMITOMO METAL MINING CO., LTD.) 15 September 2016, claims 1-12 | 1-29 |
| A | WO 2016/068263 A1 (SUMITOMO METAL MINING CO., LTD.) 06 May 2016, claims 1-10 | 1-29 |
| A | JP 2014-129188 A (SUMITOMO METAL MINING CO., LTD.) 10 July 2014, claims 1-21 | 1-29 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20.04.2020 | 28.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2020/007710

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-134670 A (TOYOTA MOTOR CORP.) 07 July 2011, claims 1-10 | 1-29 |

Form PCT/ISA/210 (continuation of second sheet) (January 2015)

**INTERNATIONAL SEARCH REPORT**

Information on patent family members

| | International application No. |
| --- | --- |
| | PCT/JP2020/007710 |

| Patent Documents referred to in the Report | Publication Date | Patent Family | Publication Date |
| --- | --- | --- | --- |
| JP 2018-172255 A | 08.11.2018 | WO 2018/181402 A1<br>CN 110366540 A<br>KR 10-2019-0132633 A | |
| JP 2016-167439 A | 15.09.2016 | US 2018/0047977 A1<br>claims 1-12<br>WO 2016/140207 A1<br>EP 3267517 A1<br>KR 10-2017-0125074 A<br>CN 107408690 A | |
| WO 2016/068263 A1 | 06.05.2016 | US 2017/0324090 A1<br>claims 1-10<br>KR 10-2017-0076723 A<br>CN 107108264 A | |
| JP 2014-129188 A | 10.07.2014 | US 2014/0186710 A1<br>claims 1-21<br>EP 2749537 A1<br>CN 103915618 A | |
| JP 2011-134670 A | 07.07.2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019076526 A
- JP 2003203633 A
- JP H10162830 A
- JP 2002201028 A